# EUROPEAN PATENT SPECIFICATION

(11) **EP 2 709 228 B1**
(45) Date of publication and mention of the grant of the patent: **09.11.2016**
(21) Application number: 12868333.1
(22) Date of filing: 10.12.2012
(51) Int. Cl.: H02H 9/04, H02M 3/335

(54) **CLAMPING PROTECTION CIRCUIT, RESONANCE CIRCUIT AND CONVERTOR**
KLEMMENSCHUTZSCHALTUNG, RESONANZKREIS UND WANDLER
CIRCUIT DE PROTECTION DE FIXATION DE NIVEAU, CIRCUIT RÉSONANT ET CONVERTISSEUR

(30) Priority: 03.05.2012 CN 201210134596
(43) Date of publication of application: 19.03.2014
(73) Proprietor: Huawei Technologies Co., Ltd., Longgang District Shenzhen, Guangdong 518129 (CN)
(72) Inventor: PAN, Denghai, Shenzhen Guangdong 518129 (CN); ZHANG, Li, Shenzhen Guangdong 518129 (CN); ZHAO, Shengqiu, Shenzhen Guangdong 518129 (CN)
(74) Representative: Körber, Martin Hans
(86) International application number: PCT/CN2012/086272
(87) International publication number: WO 2013/163879

(56) References cited:
- CN-A- 101 022 247
- CN-A- 101 674 064
- CN-A- 102 709 896
- CN-Y- 2 840 505
- US-A1- 2008 144 339
- US-A1- 2011 038 181
- US-A1- 2012 051 108
- H. MAO ET AL: "Active-Clamp Snubbers for Isolated Half-Bridge DC-DC Converters", IEEE TRANSACTIONS ON POWER ELECTRONICS, vol. 20, no. 6, 1 November 2005 (2005-11-01), pages 1294-1302, XP055193226, ISSN: 0885-8993, DOI: 10.1109/TPEL.2005.857529
- SARO L ET AL: "High-voltage MOSFET behavior in soft-switching converters: analysis and reliability improvements", TELECOMMUNICATIONS ENERGY CONFERENCE, 1998. INTELEC. TWENTIETH INTERNA TIONAL SAN FRANCISCO, CA, USA 4-8 OCT. 1998, PISCATAWAY, NJ, USA,IEEE, US, 4 October 1998 (1998-10-04), pages 30-40, XP010350565, ISBN: 978-0-7803-5069-4

## Description

### TECHNICAL FIELD

The present invention relates to circuit technologies, and in particular, to a clamp protection circuit, a resonant circuit, and a converter.

### BACKGROUND

Currently, voltage clamp control is a technology universally applied in the switching power supply field, especially in an LLC resonance topology that is now widely applied. Voltage clamp control is required for protecting a resonant capacitor and a metal oxide semiconductor field effect transistor (Metal Oxid Semiconductor, MOS) in the LLC resonance topology against stress.

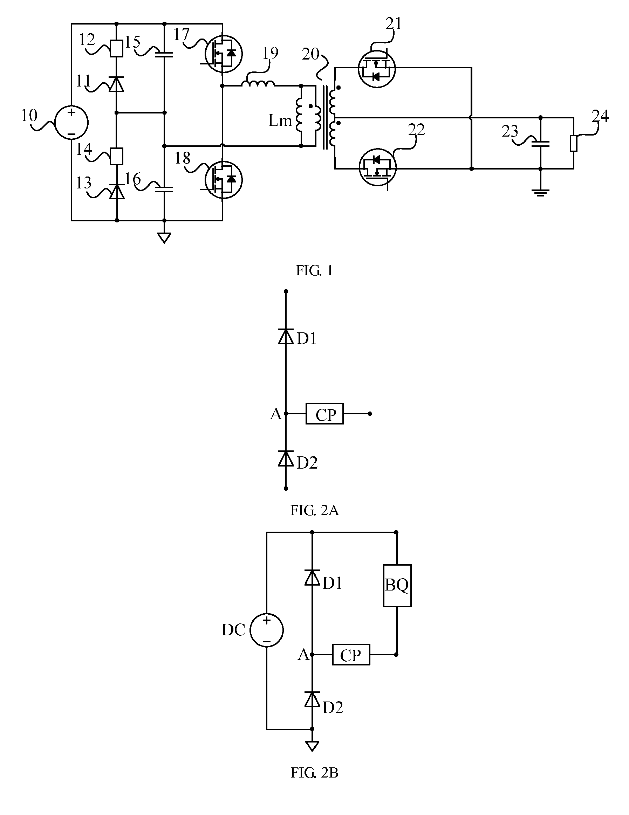

Currently, a typical resonant converter that uses a clamp protection circuit to perform voltage clamp control is shown in FIG. 1. The circuit shown in FIG. 1 includes: an input source 10; a clamp circuit that is formed by a diode 11, a clamping device 12, a diode 13, and a clamping device 14; a resonant circuit that is formed by a resonant capacitor 15, a resonant capacitor 16, a MOS transistor 17, a MOS transistor 18, a resonant inductor 19, and a transformer 20; and a rectifier circuit that is formed by a MOS transistor 21, a MOS transistor 22, an output capacitor 23, and an output resistor 24. In the clamp circuit, the diode 11 and the diode 13 are connected in series with the clamping device 121 and the clamping device 14, respectively, and the voltages of the resonant capacitors 15 and 16 are both clamped between (V1+V2+V3) and -(V4+V5), where V1 is the voltage of the input source 10, V2 is the voltage on the clamping device 12, V3 is the voltage on the diode 11, V4 is the voltage on the diode 13, and V5 is the voltage on the clamping device 14. The clamping voltage can be adjusted by adjusting the clamping devices 12 and 14.

The foregoing clamp circuit is characterized by simplicity, reliability, and the adjustability of a clamping voltage, but it requires a large number of clamping devices, occupies large space, and is implemented at a high cost.

For example H. MAO ET AL: "Active-Clamp Snubbers for Isolated Half-Bridge DC-DC Converters", IEEE TRANSACTIONS ON POWER ELECTRONICS, vol. 20, no. 6, 1 November 2005 (2005-11-01), pages 1294-1302 discloses an active-clamp snubber circuit for half-bridge dc-dc converters to recycle the energy stored in the leakage inductance by transferring this energy to a capacitor with zero-voltage zero-current-switching switched auxiliary switches, such that body-diode conduction of the primary-side main switches are prevented and primary side ringing are attenuated resulting in improved converter efficiency. Principles of operation and simulation analysis are presented and supported by experimental results that show significant improvement in efficiency.

Further, US 20080144339 A1 discloses a resonant converter with a synchronous rectification drive circuit. The synchronous rectification drive circuit includes four voltage-clamped drive circuits having output terminals coupled to the switch circuit and the corresponding switch of the full-wave-rectifier circuit, and each voltage-clamped drive circuit includes a transmission/discharge circuit for reducing the turn-off period of the coupled switch during turning off the coupled switch.

Further, SARO L ET AL: "High-voltage MOSFET behavior in soft-switching converters: analysis and reliability improvements", TELECOMMUNICATIONS ENERGY CONFERENCE, 1998. INTELEC. TWENTIETH INTERNATIONAL SAN FRANCISCO, CA, USA 4-8 OCT. 1998, PISCATAWAY, NJ, USA,IEEE, US, 4 October 1998 (1998-10-04), pages 30-40 discloses a High-Voltage MOSFET Behavior in soft-Switching Converters: Analysis and Reliability Improvements.

### SUMMARY

The embodiments of the present invention provide a clamp protection circuit, a resonant circuit, and a converter to reduce the cost of a clamp circuit and the space occupied by the clamp circuit.

In one aspect, the present invention provides a clamp protection circuit, configured to perform clamp protection for a symmetric half bridge, the clamp protection circuit comprising: a first clamp diode, a second clamp diode, and a clamping device, wherein:
the clamp protection circuit is configured to be connected with an input source of the symmetric half bridge and configured to perform clamp protection for a first resonant capacitor and a second resonant capacitor of the symmetric half bridge; and
the first clamp diode is connected in series with the second clamp diode to form a bridge arm; a cathode of the first clamp diode is configured to be connected with an anode of the input source, and an anode of the second clamp diode configured to be connected with a cathode of the input source; one end of the clamping device is connected with a midpoint of the bridge arm, and the other end of the clamping device is configured to be connected with one end of the first resonant capacitor and one end of the second resonant capacitor.

In another aspect a resonant circuit, comprising a clamp protection circuit as mentioned above and a asymmetric half bridge are provided, wherein:
the first clamp diode is connected in series with the second clamp diode to form a bridge arm; a cathode of the first clamp diode is connected with an anode of the input source, and an anode of the second clamp diode is connected with a cathode of the input source; one end of the clamping device is connected with a midpoint of the bridge arm, and the other end of the clamping device is connected with one end of the first and second resonant capacitors or a resonant inductor; and the other end of the first and second resonant capacitor or the other end of the resonant inductor is connected with the input source.

In another aspect a converter is provided, comprising a clamp protection circuit as mentioned above, a symmetric half bridge, and a rectifier circuit, wherein:
the clamp protection circuit is connected with an input source of the symmetric half bridge and configured to perform clamp protection for a first resonant capacitor and a second resonant capacitor of the symmetric half bridge;
the rectifier circuit is connected with the symmetric half bridge; and
the first clamp diode is connected in series with the second clamp diode to form a bridge arm; a cathode of the first clamp diode is connected with an anode of the input source, and an anode of the second clamp diode is connected with a cathode of the input source; one end of the clamping device is connected with a midpoint of the bridge arm, and the other end of the clamping device is connected with one end of the first resonant capacitor and one end of the second resonant capacitor; and the other end of the first resonant capacitor and the other end of the second resonant capacitor are connected with the input source.

In another aspect a converter comprising a clamp protection circuit as mentioned above, an asymmetric half bridge, and a rectifier circuit are provided, wherein:
the rectifier circuit is connected with the asymmetric half bridge; and
the first clamp diode is connected in series with the second clamp diode to form a bridge arm; a cathode of the first clamp diode is connected with an anode of the input source, and an anode of the second clamp diode is connected with a cathode of the input source; one end of the clamping device is connected with a midpoint of the bridge arm, and the other end of the clamping device is connected with one end of the first and second resonant capacitors or one end of a resonant inductor; and the other end of the first and second resonant capacitors or the other end of the resonant inductor is respectively connected with the anode and cathode of the input source.

The converter provided in another aspect of the present invention is formed by a clamp protection circuit, an asymmetric half bridge, and a rectifier circuit, where the clamp protection circuit uses two clamp diodes connected in series to form a bridge arm, and a clamping device is led out of a midpoint of the bridge arm; the other end of the clamping device is connected with one end of the resonant capacitor to be clamped or one end of a resonant inductor to be clamped, and the other end of the resonant capacitor or the other end of the resonant inductor is connected with the anode or cathode of the input source in the asymmetric half bridge to implement clamping for the resonant capacitor or resonant inductor. Compared with the prior art, the present invention reduces the number of clamping devices required, and therefore, the cost of the clamp protection circuit and the space occupied by the clamp protection circuit are reduced.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some

The converter provided in another aspect of the present invention is formed by a clamp protection circuit, a symmetric half bridge, and a rectifier circuit, where the clamp protection circuit uses two clamp diodes connected in series to form a bridge arm, and a clamping device is led out of a midpoint of the bridge arm; the other end of the clamping device is connected with one end of each of two resonant capacitors to be clamped, and the other end of each of the two resonant capacitors is connected with the anode and the cathode of the input source in the symmetric half bridge to implement clamping for the two resonant capacitors. Compared with the prior art, the present invention reduces the number of clamping devices required, and therefore, the cost of the clamp protection circuit and the space occupied by the clamp protection circuit are reduced.

The resonant circuit provided in another aspect of the present invention is formed by a clamp protection circuit and an asymmetric half bridge, where the clamp protection circuit uses two clamp diodes connected in series to form a bridge arm, and a clamping device is led out of a midpoint of the bridge arm; the other end of the clamping device is connected with one end of the resonant capacitor to be clamped or one end of a resonant inductor to be clamped, and the other end of the resonant capacitor or the other end of the resonant inductor is connected with the anode or cathode of the input source in the asymmetric half bridge to implement clamping for the resonant capacitor or resonant inductor. Compared with the prior art, the present invention reduces the number of clamping devices required, and therefore, the cost of the clamp protection circuit and the space occupied by the clamp protection circuit are reduced.

The converter provided in another aspect of the present invention is formed by a clamp protection circuit, an asymmetric half bridge, and a rectifier circuit, where the clamp protection circuit uses two clamp diodes connected in series to form a bridge arm, and a clamping device is led out of a midpoint of the bridge arm; the other end of the clamping device is connected with one end of the resonant capacitor to be clamped or one end of a resonant inductor to be clamped, and the other end of the resonant capacitor or the other end of the resonant inductor is connected with the anode or cathode of the input source in the asymmetric half bridge to implement clamping for the resonant capacitor or resonant inductor. Compared with the prior art, the present invention reduces the number of clamping devices required, and therefore, the cost of the clamp protection circuit and the space occupied by the clamp protection circuit are reduced.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a schematic structural diagram of a resonant converter that uses a clamp protection circuit to perform voltage clamp control in the prior art;
FIG. 2A is a schematic structural diagram of a clamp protection circuit according to an embodiment of the present invention;
FIG. 2B is a schematic diagram of a circuit connection relationship when a clamp protection circuit is used for clamping according to an embodiment of the present invention;
FIG. 2C is a schematic diagram of another circuit connection relationship when a clamp protection circuit is used for clamping according to an embodiment of the present invention;
FIG. 2D is a schematic diagram of another circuit connection relationship when a clamp protection circuit is used for clamping according to an embodiment of the present invention;
FIG. 3 is a schematic structural diagram of a resonant circuit according to an embodiment of the present invention;
FIG. 4 is a schematic structural diagram of a resonant circuit according to another embodiment of the present invention;
FIG. 5 is a schematic structural diagram of a resonant circuit according to another embodiment of the present invention;
FIG. 6 is a schematic structural diagram of a resonant circuit according to another embodiment of the present invention;
FIG. 7 is a schematic structural diagram of a resonant circuit according to another embodiment of the present invention;
FIG. 8 is a schematic structural diagram of a resonant circuit according to another embodiment of the present invention;
FIG. 9 is a schematic structural diagram of a resonant circuit according to another embodiment of the present invention;
FIG. 10 is a schematic structural diagram of a resonant circuit according to another embodiment of the present invention;
FIG. 11 is a schematic structural diagram of a resonant circuit according to another embodiment of the present invention;
FIG. 12 is a schematic structural diagram of a resonant circuit according to another embodiment of the present invention;
FIG. 13 is a schematic structural diagram of a converter according to an embodiment of the present invention;
FIG. 14 is a schematic structural diagram of a converter according to another embodiment of the present invention;
FIG. 15 is a schematic structural diagram of a converter according to another embodiment of the present invention;
FIG. 16 is a schematic structural diagram of a converter according to another embodiment of the present invention;
FIG. 17 is a schematic structural diagram of a converter according to another embodiment of the present invention;
FIG. 18 is a schematic structural diagram of a converter according to another embodiment of the present invention;
FIG. 19 is a schematic structural diagram of a converter according to another embodiment of the present invention;
FIG. 20 is a schematic structural diagram of a converter according to another embodiment of the present invention;
FIG. 21 is a schematic structural diagram of a converter according to another embodiment of the present invention; and
FIG. 22 is a schematic structural diagram of a resonant circuit according to another embodiment of the present invention.

### DESCRIPTION OF EMBODIMENTS

To make the objectives, technical solutions, and advantages of the embodiments of the present invention more comprehensible, the following clearly describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

FIG. 2A is a schematic structural diagram of a clamp protection circuit according to an embodiment of the present invention. The clamp protection circuit in the embodiment is configured to perform clamp protection for a circuit to be clamped. As shown in FIG. 2A, the clamp protection circuit in the embodiment includes a first clamp diode D1, a second clamp diode D2, and a clamping device CP.

The first clamp diode D1 is connected in series with the second clamp diode D2 to form a bridge arm. The first clamp diode D1 and the second clamp diode D2 each need to be connected with the circuit to be clamped. The clamping device CP is connected in series between a midpoint A of the bridge arm and the circuit to be clamped, where the bridge arm is formed by the first clamp diode D1 and the second clamp diode D2. That is, one end of the clamping device CP is connected with the midpoint of the bridge arm, and the other end of the clamping device is connected with the circuit to be clamped. To highlight the structure the clamp protection circuit in the embodiment, the circuit to be clamped is not shown in FIG. 2A.

It should be noted that the part between the midpoint A and the first clamp diode D1 forms an upper bridge arm part of the bridge arm, and the part between the midpoint A and the second clamp diode D2 forms a lower bridge arm part of the bridge arm.

The circuit to be clamped varies with practical applications. The embodiment does not restrict the structure of the circuit to be clamped, and a resonant circuit is taken as an example of the circuit.

Optionally, the clamping device CP may be, but is not limited to, any one of a bidirectional transient voltage suppression diode (TVS), a dual Zener diode (ZENER), a varistor, a gas discharge tube, and a resistor-capacitor (RC) parallel connected device, or any combination thereof.

The clamp protection circuit in the embodiment is mainly configured to clamp the voltage on the circuit to be clamped, so as to clamp the voltage on the circuit to be clamped within a specific range. Clamping the voltage on the circuit to be clamped primarily refers to clamping the voltage on one or more devices in the circuit to be clamped.

Optionally, FIG. 2B shows a circuit connection when a clamp protection circuit in the embodiment is used to perform voltage clamping for a circuit to be clamped. The cathode of the first clamp diode D1 is connected with the anode of the input source DC, and the anode of the second clamp diode D2 is connected with the cathode of the input source DC; one end of the clamping device CP is connected with a midpoint A of the bridge arm, and the other end of the clamping device is connected with one end of the circuit BQ to be clamped; and the other end of the circuit BQ to be clamped is connected with the anode of the input source DC, that is, the circuit to be clamped is located in the upper bridge arm part of the bridge arm.

Based on the circuit structure shown in FIG. 2B, the voltage on the circuit BQ to be clamped may be clamped between -(VD2+VCP) and VDC+VD1+VCP, where VD1 is a voltage of the first clamp diode D1 when the first clamp diode D1 is conducted, VD2 is a conducting voltage of the second clamp diode D2, VCP is a conducting voltage of the clamping device CP, and VDC is an output voltage of the input source DC.

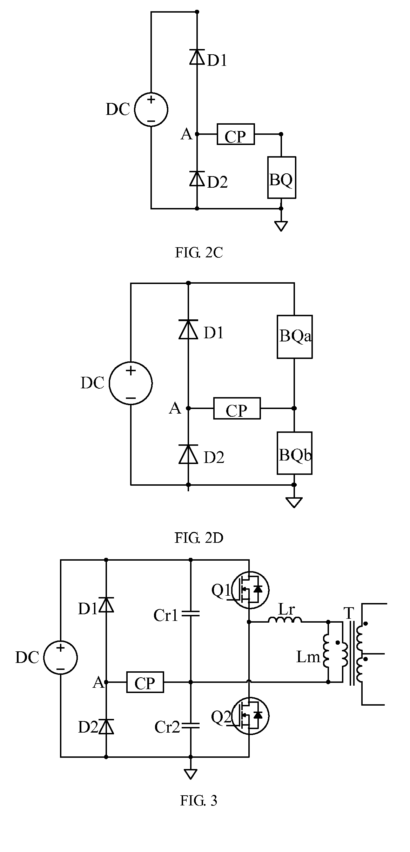

Optionally, FIG. 2C shows a circuit connection when a clamp protection circuit in the embodiment is used to perform voltage clamping for a circuit to be clamped. The cathode of the first clamp diode D1 is connected with the anode of the input source DC, and the anode of the second clamp diode D2 is connected with the cathode of the input source DC; one end of the clamping device CP is connected with a midpoint A of the bridge arm, and the other end of the clamping device is connected with one end of the circuit BQ to be clamped; and the other end of the circuit BQ to be clamped is connected with the cathode of the input source DC, that is, the circuit to be clamped is located in the lower bridge arm part of the bridge arm.

Based on the circuit structure shown in FIG. 2C, the voltage on the circuit BQ to be clamped may be clamped between -(VD2+VCP) and VDC+VD1+VCP.

Optionally, FIG. 2D shows a circuit connection when a clamp protection circuit in the embodiment is used to perform voltage clamping for a circuit to be clamped. The cathode of the first clamp diode D1 is connected with the anode of the input source DC, and the anode of the second clamp diode D2 is connected with the cathode of the input source DC; one end of the clamping device CP is connected with a midpoint A of the bridge arm, and the other end of the clamping device is connected with one end of a first circuit BQa to be clamped and one end of a second circuit BQb to be clamped; the other end of the first circuit BQa to be clamped is connected with the anode of the input source DC, that is, the circuit to be clamped is located in the upper bridge arm part of the bridge arm; and the other end of the second circuit BQb to be clamped is connected with the cathode of the input source DC, that is, the circuit to be clamped is located in the lower bridge arm part of the bridge arm.

In FIG. 2D, the circuit to be clamped includes two parts: the first circuit BQa to be clamped and the second circuit BQb to be clamped. Based on the circuit structure shown in FIG. 2D, both the voltage on the first circuit BQa to be clamped and the voltage on the second circuit BQb to be clamped may be clamped between -(VD2+VCP) and VDC+VD1+VCP.

Further, because different clamping devices CPs have different operation voltages, the range of the clamping voltage of a circuit to be clamped may be changed by changing a clamping device CP.

It can be seen from the above description that the clamp protection circuit provided in the embodiment uses two clamp diodes connected in series to form a bridge arm, and the twoconnected in series clamp diodes that are connected in series are connected with a circuit to be clamped; a clamping device is led out of a midpoint of the bridge arm; the circuit to be clamped can be clamped by connecting the circuit to be clamped between the clamping device and an input source. Compared with the prior art, the clamp protection circuit in the embodiment uses only one clamping device no matter whether one or two devices need to be clamped in the circuit to be clamped, thereby reducing the number of clamping devices required, and reducing the cost of the clamp protection circuit and the space occupied by the clamp protection circuit.

FIG. 3 is a schematic structural diagram of a resonant circuit according to an embodiment of the present invention. As shown in FIG. 3, the resonant circuit in the embodiment includes a clamp protection circuit and a symmetric half bridge.

The clamp protection circuit includes a first clamp diode D1, a second clamp diode D2, and a clamping device CP.

The symmetric half bridge includes an input source DC, a first resonant capacitor Cr1, and a second resonant capacitor Cr2. The symmetric half bridge, which includes the input source DC, the first resonant capacitor Cr1, and the second resonant capacitor Cr2, may come in different structures. The embodiment takes an LLC symmetric half bridge as an example. As shown in FIG. 3, the symmetric half bridge in the embodiment is an LLC symmetric half bridge that is formed by an input source DC, a first resonant capacitor Cr1, a second resonant capacitor Cr2, a first MOS transistor Q1, a second MOS transistor Q2, a resonant inductor Lr, and a transformer T. The transformer T is a non-ideal transformer whose excitation inductance Lm is a finite value. The "LLC" in the LLC symmetric half bridge refers to a resonant inductor Lr, an excitation inductor Lm, a first resonant capacitor Cr1, and a second resonant capacitor Cr2.

The first clamp diode D1 is connected in series with the second clamp diode D2 to form a bridge arm. The cathode of the first clamp diode D1 is connected with the anode (+) of the input source DC, and the anode of the second clamp diode D2 is connected with the cathode (-) of the input source DC. One end of the clamping device CP is connected with a midpoint A of the bridge arm, the other end of the clamping device CP is connected with one end of the first resonant capacitor Cr1 and one end of the second resonant capacitor Cr2; and the other end of the first resonant capacitor Cr1 and the other end of the second resonant capacitor Cr2 are connected with the anode and the cathode of the input source DC, respectively.

As shown in FIG. 3, the first resonant capacitor Cr1 is located in the upper bridge arm part of the bridge arm, that is, the other end of the first resonant capacitor Cr1 is connected with the anode of the input source DC; and the second resonant capacitor Cr2 is located in the lower bridge arm part of the bridge arm, that is, the other end of the second resonant capacitor Cr2 is connected with the cathode of the input source DC.

Optionally, the clamping device CP may be, but is not limited to, any one of a bidirectional TVS diode, a dual Zener diode, a varistor, a gas discharge tube and an RC parallel connected device, or any combination thereof.

The working principle of the clamp protection circuit in the embodiment is described as follows:
If an output load changes greatly, or an output voltage (that is, the voltage on the output load) jumps from a specific output voltage to another output voltage, or, at the instant of output short-circuiting, due to an inherent resonance process, a high resonance voltage can be generated on each of the first resonant capacitor Cr1 and the second resonant capacitor Cr2. When the voltage on the first resonant capacitor Cr1 is higher than VCD+VD1+VCP, the first clamp diode D1 and the clamping device CP are turned on, and the voltage of the first resonant capacitor Cr1 is clamped at VCD+VD1+VCP to the highest extent; when the voltage on the first resonant capacitor Cr1 is lower than -(VD2+VCP), the second clamp diode D2 and the clamping device CP are turned on, and the voltage of the first resonant capacitor Cr1 is clamped at -(VD2+VCP) to the lowest extent. Similarly, when the voltage on the second resonant capacitor Cr2 is higher than VDC+VD 1+VCP, the first clamp diode D1 and the clamping device CP are turned on, and the voltage of the second resonant capacitor Cr2 is clamped at VDC+VD1+VCP to the highest extent; when the voltage on the second resonant capacitor Cr2 is lower than -(VD2+VCP), the second clamp diode D2 and the clamping device CP are turned on, and the voltage of the second resonant capacitor Cr2 is clamped at -(VD2+VCP) to the lowest extent.

Further, the range of a clamping voltage of each of the first resonant capacitor Cr1 and the second resonant capacitor Cr2 may be adjusted by changing a clamping device CP that has a different operation voltage.

In the embodiment, the clamp protection circuit uses two diodes connected in series to form a bridge arm, and a clamping device is led out of a midpoint of the bridge arm; the voltages of two resonant capacitors can be clamped by connecting the two resonant capacitors between the clamping device and an input source. Compared with the prior art, the clamp protection circuit in the embodiment uses only one clamping device, thereby reducing the number of clamping devices required, and reducing the cost of the clamp protection circuit and the space occupied by the clamp protection circuit, and further making it easy to reduce the size of the whole resonant circuit.

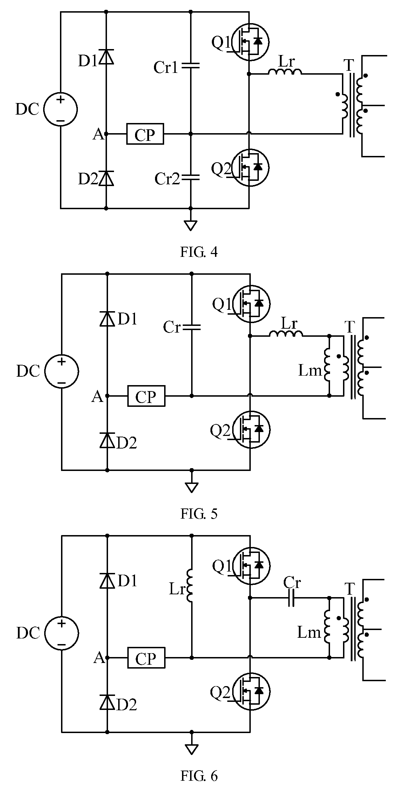

FIG. 4 is a schematic structural diagram of a resonant circuit according to another embodiment of the present invention. As shown in FIG. 4, the resonant circuit in the embodiment includes a clamp protection circuit and a symmetric half bridge.

The clamp protection circuit includes a first clamp diode D1, a second clamp diode D2, and a clamping device CP.

The symmetric half bridge includes an input source DC, a first resonant capacitor Cr1, and a second resonant capacitor Cr2. The symmetric half bridge, which includes the input source DC, the first resonant capacitor Cr1, and the second resonant capacitor Cr2, may come in different structures. The embodiment takes an LC symmetric half bridge as an example. As shown in FIG. 4, the symmetric half bridge in the embodiment is an LC symmetric half bridge that is formed by an input source DC, a first resonant capacitor Cr1, a second resonant capacitor Cr2, a first MOS transistor Q1, a second MOS transistor Q2, a resonant inductor Lr, and a transformer T. The transformer T is an ideal transformer whose excitation inductance is infinite (hence not illustrated).

The first clamp diode D1 is connected in series with the second clamp diode D2 to form a bridge arm. The cathode of the first clamp diode D1 is connected with the anode (+) of the input source DC, and the anode of the second clamp diode D2 is connected with the cathode (-) of the input source DC. One end of the clamping device CP is connected with a midpoint A of the bridge arm, the other end of the clamping device CP is connected with one end of the first resonant capacitor Cr1 and one end of the second resonant capacitor Cr2; and the other end of the first resonant capacitor Cr1 and the other end of the second resonant capacitor Cr2 are connected with the anode and the cathode of the input source DC, respectively.

As shown in FIG. 4, the first resonant capacitor Cr1 is located in the upper bridge arm part of the bridge arm, that is, the other end of the first resonant capacitor Cr1 is connected with the anode of the input source DC; and the second resonant capacitor Cr2 is located in the lower bridge arm part of the bridge arm, that is, the other end of the second resonant capacitor Cr2 is connected with the cathode of the input source DC.

Optionally, the clamping device CP may be, but is not limited to, any one of a bidirectional TVS diode, a dual Zener diode, a varistor, a gas discharge tube and an RC parallel connected device, or any combination thereof.

As shown in FIG. 4, the resonant circuit in this embodiment is similar to the resonant circuit shown in FIG. 3, but differs in the structure of the symmetric half bridge.

The working principle of the clamp protection circuit in this embodiment is the same as the working principle of the clamp protection circuit in the embodiment shown in FIG. 3, and details are not repeated here any further.

In the embodiment, the clamp protection circuit uses two diodes connected in series to form a bridge arm, and a clamping device is led out of a midpoint of the bridge arm; the voltages of two resonant capacitors can be clamped by connecting the two resonant capacitors between the clamping device and an input source. Compared with the prior art, the clamp protection circuit in the embodiment uses only one clamping device, thereby reducing the number of clamping devices required, and reducing the cost of the clamp protection circuit and the space occupied by the clamp protection circuit, and further making it easy to reduce the size of the whole resonant circuit.

FIG. 5 is a schematic structural diagram of a resonant circuit according to another example. As shown in FIG. 5, the resonant circuit in the example includes a clamp protection circuit and an asymmetric half bridge.

The clamp protection circuit includes a first clamp diode D1, a second clamp diode D2, and a clamping device CP.

The asymmetric half bridge includes an input source DC, a resonant capacitor Cr, and a resonant inductor Lr. The asymmetric half bridge, which includes the input source DC, the resonant capacitor Cr, and the resonant inductor Lr, may come in different structures. The example takes an LLC asymmetric half bridge as an example. As shown in FIG. 5, the asymmetric half bridge in the example is an LLC asymmetric half bridge
that is formed by an input source DC, a resonant capacitor Cr, a first MOS transistor Q 1, a second MOS transistor Q2, a resonant inductor Lr, and a transformer T. The transformer T is a non-ideal transformer whose excitation inductance Lm is a finite value. The "LLC" in the LLC asymmetric half bridge refers to a resonant inductor Lr, an excitation inductor Lm, and a resonant capacitor Cr.

The first clamp diode D1 is connected in series with the second clamp diode D2 to form a bridge arm. The cathode of the first clamp diode D1 is connected with the anode (+) of the input source DC, and the anode of the second clamp diode D2 is connected with the cathode (-) of the input source DC. One end of the clamping device CP is connected with a midpoint A of the bridge arm, the other end of the clamping device CP is connected with one end of the resonant capacitor Cr; and the other end of the resonant capacitor Cr is connected with the anode or the cathode of the input source DC.

As shown in FIG. 5, the resonant capacitor Cr is located in the upper bridge arm part of the bridge arm, and the other end of the resonant capacitor Cr is connected with the anode of the input source DC.

Optionally, the clamping device CP may be, but is not limited to, any one of a bidirectional TVS diode, a dual Zener diode, a varistor, a gas discharge tube and an RC parallel connected device, or any combination thereof.

The working principle of the clamp protection circuit in the example is described as follows:
If an output load changes greatly, or an output voltage (that is, the voltage on the output load) jumps from a specific output voltage to another output voltage, or, at the instant of output short-circuiting, due to an inherent resonance process, a high resonance voltage can generated on the resonant capacitor Cr. When the voltage on the resonant capacitor Cr is higher than VCD+VD1+VCP, the first clamp diode D1 and the clamping device CP are turned on, and the voltage of the resonant capacitor Cr is clamped at VCD+VD1+VCP to the highest extent; when the voltage on the resonant capacitor Cr is lower than -(VD2+VCP), the second clamp diode D2 and the clamping device CP are turned on, and the voltage of the resonant capacitor Cr is clamped at -(VD2+VCP) to the lowest extent.

Further, the range of the clamping voltage of the resonant capacitor Cr may be adjusted by changing a clamping device CP that has a different operation voltage.

In the example, the clamp protection circuit uses two diodes connected in series to form a bridge arm, and a clamping device is led out of a midpoint of the bridge arm; the voltage of a resonant capacitor can be clamped by connecting the resonant capacitor between the clamping device and an input source. Compared with the prior art, the clamp protection circuit in the example uses only one clamping device, thereby reducing the
number of clamping devices required, and reducing the cost of the clamp protection circuit and the space occupied by the clamp protection circuit, and further making it easy to reduce the size of the whole resonant circuit.

FIG. 6 is a schematic structural diagram of a resonant circuit according to another example. As shown in FIG. 6, the resonant circuit in this example is similar to the resonant circuit in the example shown in FIG. 5, but the difference lies in that the resonant capacitor Cr is swapped with the resonant inductor Lr. As shown in FIG. 6, the resonant inductor Lr is located in the upper bridge arm part of the bridge arm, one end of the resonant inductor Lr is connected with the clamping device CP, and the other end of the resonant inductor Lr is connected with the anode of the input source DC. For other details about the resonant circuit, reference can be made to the description in the example shown in FIG. 5, and the details are not
repeated here any further.

The working principle of the clamp protection circuit in the example is described as follows:
If an output load changes greatly, or an output voltage jumps from a specific output voltage to another output voltage, or, at the instant of output short-circuiting, due to an inherent resonance process, a high resonance voltage can be generated on the resonant inductor Lr. When the voltage on the resonant inductor Lr is higher than VCD+VD1+VCP, the first clamp diode D1 and the clamping device CP are turned on, and the voltage of the resonant inductor Lr is clamped at VCD+VD1+VCP to the highest extent; when the voltage on the resonant inductor Lr is lower than -(VD2+VCP), the second clamp diode D2 and the clamping device CP are turned on, and the voltage of the resonant inductor Lr is clamped at -(VD2+VCP) to the lowest extent.

In the example, the clamp protection circuit uses two diodes connected in series to form a bridge arm,
and a clamping device is led out of a midpoint of the bridge arm; the voltage of a resonant inductor can be clamped by connecting the resonant inductor between the clamping device and an input source. Compared with the prior art, the clamp protection circuit in the example uses only one clamping device, thereby reducing the number of clamping devices required, and reducing the cost of the clamp protection circuit and the space occupied by the clamp protection circuit, and further making it easy to reduce the size of the whole resonant circuit.

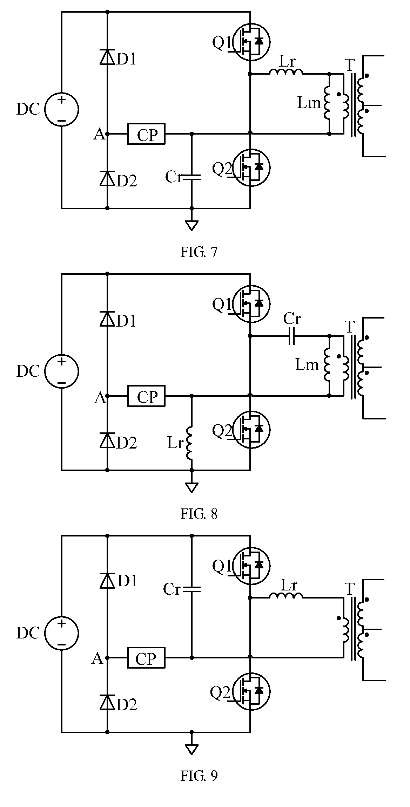

FIG. 7 is a schematic structural diagram of a resonant circuit according to another example. As shown in FIG. 7, the resonant circuit in this embodiment is similar to the resonant circuit in the example shown in FIG. 5, but the difference lies in that the resonant capacitor Cr in this example is located in the lower bridge arm part of the bridge arm, that is, the other end of the resonant capacitor Cr is connected with the cathode of the input source DC. For other details about the resonant circuit, reference can be made to the description in the example shown in FIG. 5, and the details are not repeated here any further.

The working principle of the clamp protection circuit in the example is described as follows:
If an output load changes greatly, or an output voltage jumps from a specific output voltage to another output voltage, or, at the instant of output short-circuiting, due to an inherent resonance process, a high resonance voltage can be generated on the resonant capacitor Cr. When the voltage on the resonant capacitor Cr is higher than VDC+VD 1+VCP, the first clamp diode D1 and the clamping device CP are turned on, and the voltage of the resonant capacitor Cr is clamped at VDC+VD1+VCP to the highest extent; when the voltage on the resonant capacitor Cr is lower than -(VD2+VCP), the second clamp diode D2 and the clamping device CP are turned on, and the voltage of the resonant capacitor Cr is clamped at -(VD2+VCP) to the lowest extent.

Further, the range of the clamping voltage of the resonant capacitor Cr may be adjusted by changing a clamping device CP that has a different operation voltage.

In the example, the clamp protection circuit uses two diodes connected in series to form a bridge arm,
and a clamping device is led out of a midpoint of the bridge arm; the voltage of a resonant capacitor can be clamped by connecting the resonant capacitor between the clamping device and an input source. Compared with the prior art, the clamp protection circuit in the example uses only one clamping device, thereby reducing the number of clamping devices required, and reducing the cost of the clamp protection circuit and the space occupied by the clamp protection circuit, and further making it easy to reduce the size of the whole resonant circuit.

FIG. 8 is a schematic structural diagram of a resonant circuit according to another example. As shown in FIG. 8, the resonant circuit in this embodiment is similar to the resonant circuit in the example shown in FIG. 6, but the difference lies in that the resonant inductor Lr in this example is located in the lower bridge arm part of the bridge arm, that is, the other end of the resonant inductor Lr is connected with the cathode of the input source DC. For other details about the resonant circuit, reference can be made to the description in the example shown in FIG. 6, and the details are not repeated here any further.

The working principle of the clamp protection circuit in the example is described as follows:
If an output load changes greatly, or an output voltage (that is, the voltage on the output load) jumps from a specific output voltage to another output voltage, or, at the instant of output short-circuiting, due to an inherent resonance process, a high resonance voltage can be generated on the resonant inductor Lr. When the voltage on the resonant inductor Lr is higher than VDC+VD1+VCP, the first clamp diode D1 and the clamping device CP are turned on, and the voltage of the resonant inductor Lr is clamped at VDC+VD1+VCP to the highest extent; when the voltage on the resonant inductor Lr is lower than -(VD2+VCP), the second clamp diode D2 and the clamping device CP are turned on, and the voltage of the resonant inductor Lr is clamped at -(VD2+VCP) to the lowest extent.

Further, the range of the clamping voltage of the resonant inductor Lr may be adjusted by changing a clamping device CP that has a different operation voltage.

In the example, the clamp protection circuit uses two diodes connected in series to form a bridge arm, and a clamping device is led out of a midpoint of the bridge arm; the voltage of a resonant inductor can be clamped by connecting the resonant inductor between the clamping device and an input source. Compared with the prior art, the clamp protection circuit in the example uses only one clamping device, thereby reducing the number of clamping devices required, and reducing the cost of the clamp protection circuit and the space occupied by the clamp protection circuit, and further making it easy to reduce the size of the whole resonant circuit.

FIG. 9 is a schematic structural diagram of a resonant circuit according to another example. As shown in FIG. 9, the resonant circuit in the example includes a clamp protection circuit
and an asymmetric half bridge.

The clamp protection circuit includes a first clamp diode D1, a second clamp diode D2, and a clamping device CP.

The asymmetric half bridge includes an input source DC, a resonant capacitor Cr, and a resonant inductor Lr. The asymmetric half bridge, which includes the input source DC, the resonant capacitor Cr, and the resonant inductor Lr, may come in different structures. The example takes an LC asymmetric half bridge as an example. As shown in FIG. 9, the asymmetric half bridge in the example is an LC asymmetric half bridge
that is formed by an input source DC, a resonant capacitor Cr, a first MOS transistor Q 1, a second MOS transistor Q2, a resonant inductor Lr, and a transformer T. The transformer T is an ideal transformer whose excitation inductance is infinite (hence not illustrated).

The first clamp diode D1 is connected in series with the second clamp diode D2 to form a bridge arm. The cathode of the first clamp diode D1 is connected with the anode (+) of the input source DC, and the anode of the second clamp diode D2 is connected with the cathode (-) of the input source DC. One end of the clamping device CP is connected with a midpoint A of the bridge arm, the other end of the clamping device CP is connected with one end of the resonant capacitor Cr; and the other end of the resonant capacitor Cr is connected with the anode or the cathode of the input source DC.

As shown in FIG. 9, the resonant capacitor Cr is located in the upper bridge arm part of the bridge arm, and the other end of the resonant capacitor Cr is connected with the anode of the input source DC.

Optionally, the clamping device CP may be, but is not limited to, any one of a bidirectional TVS diode, a dual Zener diode, a varistor, a gas discharge tube and an RC parallel connected device, or any combination thereof.

The resonant circuit in this example is similar to the resonant circuit in the example shown in FIG. 5,
but differs in the structure of the asymmetric half bridge.

The working principle of the clamp protection circuit in the example is described as follows:
If an output load changes greatly, or an output voltage (that is, the voltage on the output load) jumps from a specific output voltage to another output voltage, or, at the instant of output short-circuiting, due to an inherent resonance process, a high resonance voltage can be generated on the resonant capacitor Cr. When the voltage on the resonant capacitor Cr is higher than VCD+VD1+VCP, the first clamp diode D1 and the clamping device CP are turned on, and the voltage of the resonant capacitor Cr is clamped at VCD+VD 1+VCP to the highest extent; when the voltage on the resonant capacitor Cr is lower than -(VD2+VCP), the second clamp diode D2 and the clamping device CP are turned on, and the voltage of the resonant capacitor Cr is clamped at -(VD2+VCP) to the lowest extent.

Further, the range of the clamping voltage of the resonant capacitor Cr may be adjusted by changing a clamping device CP that has a different operation voltage.

In the example the clamp protection circuit uses two diodes connected in series to form a bridge arm,
and a clamping device is led out of a midpoint of the bridge arm; the voltage of a resonant capacitor can be clamped by connecting the resonant capacitor between the clamping device and an input source. Compared with the prior art, the clamp protection circuit in the embodiment uses only one clamping device, thereby reducing the number of clamping devices required, and reducing the cost of the clamp protection circuit and the space occupied by the clamp protection circuit, and further making it easy to reduce the size of the whole resonant circuit.

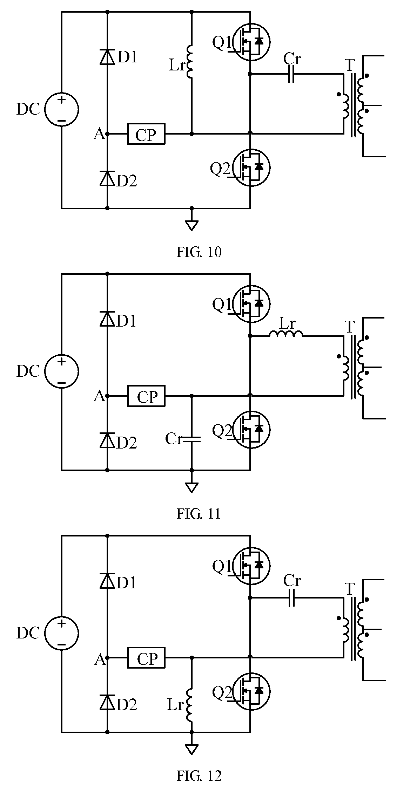

FIG. 10 is a schematic structural diagram of a resonant circuit according to another example. As shown in FIG. 10, the resonant circuit in this embodiment is similar to the resonant circuit in the example shown in FIG. 9, but the difference lies in that the resonant capacitor Cr is swapped with the
resonant inductor Lr. As shown in FIG. 9, the resonant inductor Lr is located in the upper bridge arm part of the bridge arm, one end of the resonant inductor Lr is connected with the clamping device CP, and the other end of the resonant inductor Lr is connected with the anode of the input source DC. For other details about the resonant circuit, reference can be made to the description in the example shown in FIG. 9, and the details are not repeated here any further.

The working principle of the clamp protection circuit in the example is described as follows:
If an output load changes greatly, or an output voltage (that is, the voltage on the output load) jumps from a specific output voltage to another output voltage, or, at the instant of output short-circuiting, due to an inherent resonance process, a high resonance voltage can be generated on the resonant inductor Lr. When the voltage on the resonant inductor Lr is higher than VCD+VD1+VCP, the first clamp diode D1 and the clamping device CP are turned on, and the voltage of the resonant inductor Lr is clamped at VCD+VD1+VCP to the highest extent; when the voltage on the resonant inductor Lr is lower than -(VD2+VCP), the second clamp diode D2 and the clamping device CP are turned on, and the voltage of the resonant inductor Lr is clamped at -(VD2+VCP) to the lowest extent.

In the example the clamp protection circuit uses two diodes connected in series to form a bridge arm,
and a clamping device is led out of a midpoint of the bridge arm; the voltage of a resonant inductor can be clamped by connecting the resonant inductor between the clamping device and an input source. Compared with the prior art, the clamp protection circuit in the example uses only one clamping device, thereby reducing the number of clamping devices required, and reducing the cost of the clamp protection circuit and the space occupied by the clamp protection circuit, and further making it easy to reduce the size of the whole resonant circuit.

FIG. 11 is a schematic structural diagram of a resonant circuit according to another example As shown in FIG. 11, the resonant circuit in this example is similar to the resonant circuit in the example shown in FIG. 9, but the difference lies in that the resonant capacitor Cr in this example is located in the lower bridge arm part of the bridge arm, that is, the other end of the resonant capacitor Cr is connected with the cathode of the input source DC. For other details about the resonant circuit, reference can be made to the description in the example shown in FIG. 9, and the details are not repeated here any further.

The working principle of the clamp protection circuit in the example is described as follows:
If an output load changes greatly, or an output voltage (that is, the voltage on the output load) jumps from a specific output voltage to another output voltage, or, at the instant of output short-circuiting, due to an inherent resonance process, a high resonance voltage can be generated on the resonant capacitor Cr. When the voltage on the resonant capacitor Cr is higher than VDC+VD1+VCP, the first clamp diode D1 and the clamping device CP are turned on, and the voltage of the resonant capacitor Cr is clamped at VDC+VD1+VCP to the highest extent; when the voltage on the resonant capacitor Cr is lower than -(VD2+VCP), the second clamp diode D2 and the clamping device CP are turned on, and the voltage of the resonant capacitor Cr is clamped at -(VD2+VCP) to the lowest extent.

Further, the range of the clamping voltage of the resonant capacitor Cr may be adjusted by changing a clamping device CP that has a different operation voltage.

In the example, the clamp protection circuit uses two diodes connected in series to form a bridge arm,
and a clamping device is led out of a midpoint of the bridge arm; the voltage of a resonant capacitor can be clamped by connecting the resonant capacitor between the clamping device and an input source. Compared with the prior art, the clamp protection circuit in the example uses only one clamping device, thereby reducing the number of clamping devices required, and reducing the cost of the clamp protection circuit and the space occupied by the clamp protection circuit, and further making it easy to reduce the size of the whole resonant circuit.

FIG. 12 is a schematic structural diagram of a resonant circuit according to another example. As shown in FIG. 12, the resonant circuit in this example is similar to the resonant circuit in the example shown in FIG. 10, but the difference lies in that the resonant inductor Lr in this example is located in the lower bridge arm part of the bridge arm, that is, the other end of the resonant inductor Lr is connected with the cathode of the input source DC. For other details about the resonant circuit, reference can be made to the description in the example shown in FIG. 10, and the details are not repeated here any further.

The working principle of the clamp protection circuit in the example is described as follows:
If an output load changes greatly, or an output voltage (that is, the voltage on the output load) jumps from a specific output voltage to another output voltage, or, at the instant of output short-circuiting, due to an inherent resonance process, a high resonance voltage can be generated on the resonant inductor Lr. When the voltage on the resonant inductor Lr is higher than VDC+VD1+VCP, the first clamp diode D1 and the clamping device CP are turned on, and the voltage of the resonant inductor Lr is clamped at VDC+VD1+VCP to the highest extent; when the voltage on the resonant inductor Lr is lower than -(VD2+VCP), the second clamp diode D2 and the clamping device CP are turned on, and the voltage of the resonant inductor Lr is clamped at -(VD2+VCP) to the lowest extent.

Further, the range of the clamping voltage of the resonant inductor Lr may be adjusted by changing a clamping device CP that has a different operation voltage.

In the example, the clamp protection circuit uses two diodes connected in series to form a bridge arm,
and a clamping device is led out of a midpoint of the bridge arm; the voltage of a resonant inductor can be clamped by connecting the resonant inductor between the clamping device and an input source. Compared with the prior art, the clamp protection circuit in the example uses only one clamping device, thereby reducing the number of clamping devices required, and reducing the cost of the clamp protection circuit and the space occupied by the clamp protection circuit, and further making it easy to reduce the size of the whole resonant circuit.

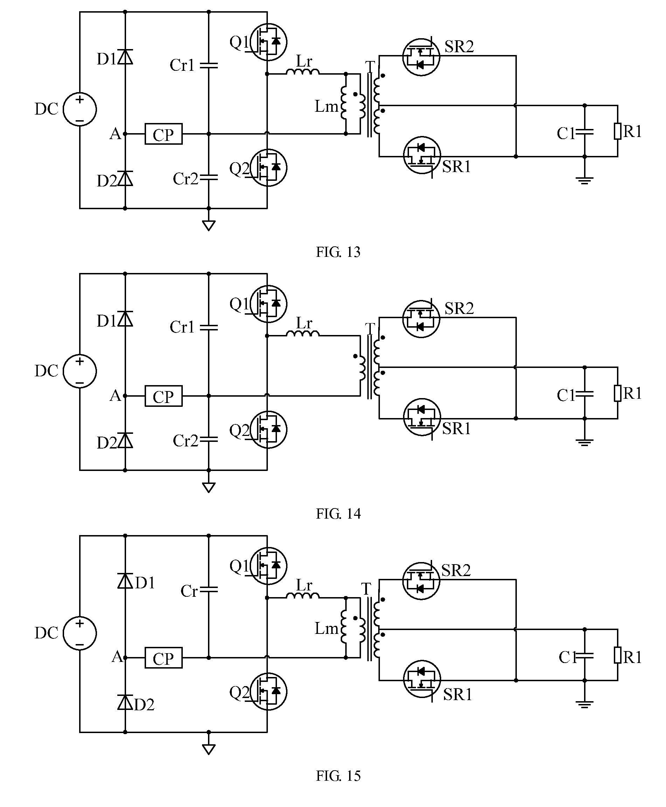

FIG. 13 is a schematic structural diagram of a converter according to an embodiment of the present invention. As shown in FIG. 13, the converter in the embodiment includes a clamp protection circuit, a symmetric half bridge, and a rectifier circuit.

The clamp protection circuit includes a first clamp diode D1, a second clamp diode D2, and a clamping device CP.

The symmetric half bridge includes an input source DC, a first resonant capacitor Cr1, and a second resonant capacitor Cr2. The symmetric half bridge, which includes the input source DC, the first resonant capacitor Cr1, and the second resonant capacitor Cr2, may come in different structures. The embodiment takes an LLC symmetric half bridge as an example. As shown in FIG. 13, the symmetric half bridge in the embodiment is an LLC symmetric half bridge that is formed by an input source DC, a first resonant capacitor Cr1, a second resonant capacitor Cr2, a first MOS transistor Q1, a second MOS transistor Q2, a resonant inductor Lr, and a transformer T. The transformer T is a non-ideal transformer whose excitation inductance Lm is a finite value. The "LLC" in the LLC symmetric half bridge refers to a resonant inductor Lr, an excitation inductor Lm, a first resonant capacitor Cr1, and a second resonant capacitor Cr2. The resonant circuit is connected with the symmetric half bridge. The transformer T and the rectifier circuit make up the output load of the symmetric half bridge (that is, the resonant circuit).

As shown in FIG. 13, the rectifier circuit in the embodiment is a synchronous rectifier circuit that is formed by a first rectification MOS transistor SR1, a second rectification MOS transistor SR2, an output capacitor C1, and an output resistor R1. In addition to being a synchronous rectifier circuit, the rectifier circuit in the embodiment may also be a diode rectifier circuit that is formed by a first rectification diode, a second rectification diode, an output capacitor, and an output resistor. The diode rectifier circuit differs from the synchronous rectifier circuit in that a diode instead of a MoS transistor is used as a rectifier.

The first clamp diode D1 is connected in series with the second clamp diode D2 to form a bridge arm. The cathode of the first clamp diode D1 is connected with the anode of the input source DC, and the anode of the second clamp diode D2 is connected with the cathode of the input source DC. One end of the clamping device CP is connected with a midpoint A of the bridge arm, the other end of the clamping device CP is connected with one end of the first resonant capacitor Cr1 and one end of the second resonant capacitor Cr2; and the other end of the first resonant capacitor Cr1 and the other end of the second resonant capacitor Cr2 are connected with the anode and the cathode of the input source DC, respectively.

As shown in FIG. 13, the first resonant capacitor Cr1 is located in the upper bridge arm part of the bridge arm, that is, the other end of the first resonant capacitor Cr1 is connected with the anode of the input source DC; and the second resonant capacitor Cr2 is located in the lower bridge arm part of the bridge arm, that is, the other end of the second resonant capacitor Cr2 is connected with the cathode of the input source DC.

Optionally, the clamping device CP may be, but is not limited to, any one of a bidirectional TVS diode, a dual Zener diode, a varistor, a gas discharge tube and an RC parallel connected device, or any combination thereof.

The working principle of the clamp protection circuit in the embodiment is described as follows:
If an output load (that is, the output resistor R1 in FIG. 13) changes greatly, or an output voltage (that is, the voltage on the output resistor R1) jumps from a specific output voltage to another output voltage, or, at the instant of output short-circuiting, due to an inherent resonance process, a high resonance voltage can be generated on each of the first resonant capacitor Cr1 and the second resonant capacitor Cr2. When the voltage on the first resonant capacitor Cr1 is higher than VCD+VD1+VCP, the first clamp diode D1 and the clamping device CP are turned on, and the voltage of the first resonant capacitor Cr1 is clamped at VCD+VD1+VCP to the highest extent; when the voltage on the first resonant capacitor Cr1 is lower than -(VD2+VCP), the second clamp diode D2 and the clamping device CP are turned on, and the voltage of the first resonant capacitor Cr1 is clamped at -(VD2+VCP) to the lowest extent. Similarly, when the voltage on the second resonant capacitor Cr2 is higher than VDC+VD 1+VCP, the first clamp diode D1 and the clamping device CP are turned on, and the voltage of the second resonant capacitor Cr2 is clamped at VDC+VD1+VCP to the highest extent; when the voltage on the second resonant capacitor Cr2 is lower than -(VD2+VCP), the second clamp diode D2 and the clamping device CP are turned on, and the voltage of the second resonant capacitor Cr2 is clamped at -(VD2+VCP) to the lowest extent.

Further, the range of a clamping voltage of each of the first resonant capacitor Cr1 and the second resonant capacitor Cr2 may be adjusted by changing a clamping device CP that has a different operation voltage.

In the embodiment, the clamp protection circuit uses two diodes connected in series to form a bridge arm, and a clamping device is led out of a midpoint of the bridge arm; the voltages of two resonant capacitors can be clamped by connecting the two resonant capacitors between the clamping device and an input source. Compared with the prior art, the clamp protection circuit in the embodiment uses only one clamping device, thereby reducing the number of clamping devices required, and reducing the cost of the clamp protection circuit and the space occupied by the clamp protection circuit, and further making it easy to reduce the size of the whole resonant circuit.

FIG. 14 is a schematic structural diagram of a converter according to another embodiment of the present invention. The converter in the embodiment includes a clamp protection circuit, a symmetric half bridge, and a rectifier circuit.

The clamp protection circuit includes a first clamp diode D1, a second clamp diode D2, and a clamping device CP.

The symmetric half bridge includes an input source DC, a first resonant capacitor Cr1, and a second resonant capacitor Cr2. The symmetric half bridge, which includes the input source DC, the first resonant capacitor Cr1, and the second resonant capacitor Cr2, may come in different structures. The embodiment takes an LC symmetric half bridge as an example. As shown in FIG. 14, the symmetric half bridge in the embodiment is an LC symmetric half bridge that is formed by an input source DC, a first resonant capacitor Cr1, a second resonant capacitor Cr2, a first MOS transistor Q1, a second MOS transistor Q2, a resonant inductor Lr, and a transformer T. The transformer T is an ideal transformer whose excitation inductance is infinite (hence not illustrated). The transformer T and the rectifier circuit make up the output load of the symmetric half bridge (that is, the resonant circuit).

The rectifier circuit is connected with the LC symmetric half bridge. As shown in FIG. 14, the rectifier circuit in the embodiment is a synchronous rectifier circuit that is formed by a first rectification MOS transistor SR1, a second rectification MOS transistor SR2, an output capacitor C1, and an output resistor R1. In addition to being a synchronous rectifier circuit, the rectifier circuit in the embodiment may also be a diode rectifier circuit that is formed by a first rectification diode, a second rectification diode, an output capacitor, and an output resistor. The diode rectifier circuit differs from the synchronous rectifier circuit in that a diode instead of a MoS transistor is used as a rectifier.

The first clamp diode D1 is connected in series with the second clamp diode D2 to form a bridge arm. The cathode of the first clamp diode D1 is connected with the anode of the input source DC, and the anode of the second clamp diode D2 is connected with the cathode of the input source DC. One end of the clamping device CP is connected with a midpoint A of the bridge arm, the other end of the clamping device CP is connected with one end of the first resonant capacitor Cr1 and one end of the second resonant capacitor Cr2; and the other end of the first resonant capacitor Cr1 and the other end of the second resonant capacitor Cr2 are connected with the anode and the cathode of the input source DC, respectively.

As shown in FIG. 14, the first resonant capacitor Cr1 is located in the upper bridge arm part of the bridge arm, that is, the other end of the first resonant capacitor Cr1 is connected with the anode of the input source DC; and the second resonant capacitor Cr2 is located in the lower bridge arm part of the bridge arm, that is, the other end of the second resonant capacitor Cr2 is connected with the cathode of the input source DC.

Optionally, the clamping device CP may be, but is not limited to, any one of a bidirectional TVS diode, a dual Zener diode, a varistor, a gas discharge tube and an RC parallel connected device, or any combination thereof.

As shown in FIG. 14, the resonant circuit in this embodiment is similar to the resonant circuit shown in FIG. 13, but differs in the structure of the symmetric half bridge.

The working principle of the clamp protection circuit in this embodiment is the same as the working principle of the clamp protection circuit in the embodiment shown in FIG. 13, and details are not repeated here any further.

In the embodiment, the clamp protection circuit uses two diodes connected in series to form a bridge arm, and a clamping device is led out of a midpoint of the bridge arm; the voltages of two resonant capacitors can be clamped by connecting the two resonant capacitors between the clamping device and an input source. Compared with the prior art, the clamp protection circuit in the embodiment uses only one clamping device, thereby reducing the number of clamping devices required, and reducing the cost of the clamp protection circuit and the space occupied by the clamp protection circuit, and further making it easy to reduce the size of the whole resonant circuit.

FIG. 15 is a schematic structural diagram of a converter according to example. As shown in FIG. 15, the converter in the example includes a clamp protection circuit, an asymmetric half bridge, and a rectifier circuit.

The clamp protection circuit includes a first clamp diode D1, a second clamp diode D2, and a clamping device CP.

The asymmetric half bridge includes an input source DC, a resonant capacitor Cr, and a resonant inductor Lr. The asymmetric half bridge, which includes the input source DC, the resonant capacitor Cr, and the resonant inductor Lr, may come in different structures. The example takes an LLC asymmetric half bridge as an example. As shown in FIG. 15, the asymmetric half bridge in the example is an LLC asymmetric half bridge
that is formed by an input source DC, a resonant capacitor Cr, a first MOS transistor Q 1, a second MOS transistor Q2, a resonant inductor Lr, and a transformer T. The transformer T is a non-ideal transformer whose excitation inductance Lm is a finite value. The "LLC" in the LLC asymmetric half bridge refers to a resonant inductor Lr, an excitation inductor Lm, and a resonant capacitor Cr. The rectifier circuit is connected with the asymmetric half bridge. The transformer T and the rectifier circuit make up the output load of the asymmetric half bridge (that is, the rectifier circuit).

As shown in FIG. 15, the rectifier circuit in the example is a synchronous rectifier circuit that is formed by a first rectification MOS transistor SR1, a second rectification MOS transistor SR2, an output capacitor C1, and an output resistor R1. In addition to being a synchronous rectifier circuit, the rectifier circuit in the example may also be a diode rectifier circuit that is formed by a first rectification diode, a second rectification diode, an output capacitor, and an output resistor. The diode rectifier circuit differs from the synchronous rectifier circuit in that a diode instead of a MoS transistor is used as a rectifier.

The first clamp diode D1 is connected in series with the second clamp diode D2 to form a bridge arm. The cathode of the first clamp diode D1 is connected with the anode of the input source DC, and the anode of the second clamp diode D2 is connected with the cathode of the input source DC. One end of the clamping device CP is connected with a midpoint A of the bridge arm, the other end of the clamping device CP is connected with one end of the resonant capacitor Cr; and the other end of the resonant capacitor Cr is connected with the anode or the cathode of the input source DC.

As shown in FIG. 15, the resonant capacitor Cr is located in the upper bridge arm part of the bridge arm, and the other end of the resonant capacitor Cr is connected with the anode of the input source DC.

Optionally, the clamping device CP may be, but is not limited to, any one of a bidirectional TVS diode, a dual Zener diode, a varistor, a gas discharge tube and an RC parallel connected device, or any combination thereof.

The working principle of the clamp protection circuit in the example is described as follows:
If an output load (that is, the output resistor R1) changes greatly, or an output voltage (that is, the voltage on the output resistor R1) jumps from a specific output voltage to another output voltage, or, at the instant of output short-circuiting, due to an inherent resonance process, a high resonance voltage can be generated on the resonant capacitor Cr. When the voltage on the resonant capacitor Cr is higher than VCD+VD1+VCP, the first clamp diode D1 and the clamping device CP are turned on, and the voltage of the resonant capacitor Cr is clamped at VCD+VD1+VCP to the highest extent; when the voltage on the resonant capacitor Cr is lower than -(VD2+VCP), the second clamp diode D2 and the clamping device CP are turned on, and the voltage of the resonant capacitor Cr is clamped at -(VD2+VCP) to the lowest extent.

Further, the range of the clamping voltage of the resonant capacitor Cr may be adjusted by changing a clamping device CP that has a different operation voltage.

In the example, the clamp protection circuit uses two diodes connected in series to form a bridge arm,
and a clamping device is led out of a midpoint of the bridge arm; the voltage of a resonant capacitor can be clamped by connecting the resonant capacitor between the clamping device and an input source. Compared with the prior art, the clamp protection circuit in the example uses only one clamping device, thereby reducing the number of clamping devices required, and reducing the cost of the clamp protection circuit and the space occupied by the clamp protection circuit, and further making it easy to reduce the size of the whole resonant circuit.

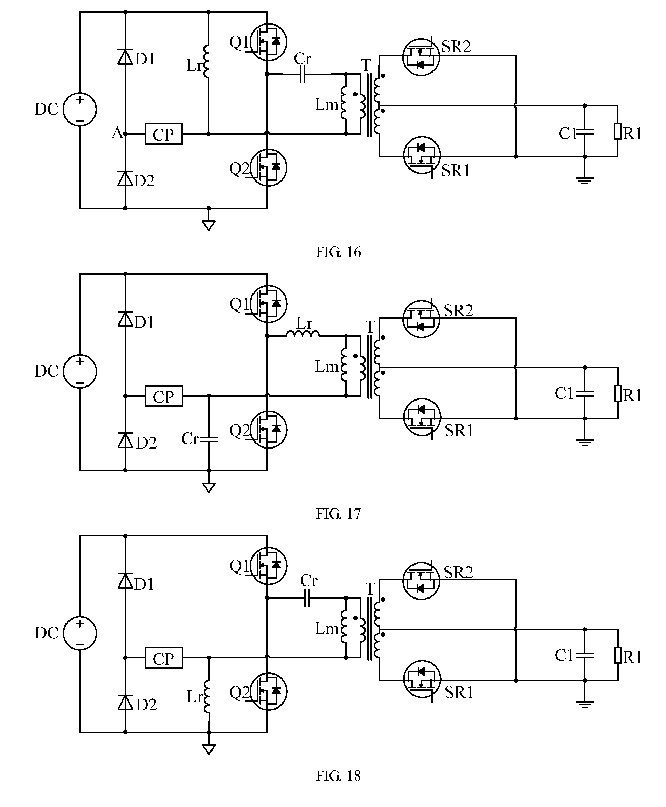

FIG. 16 is a schematic structural diagram of a converter according to another example. As shown in FIG. 16, the converter in this example is similar to the converter in the example shown in FIG. 15, but the difference lies in that the location of the resonant capacitor Cr is swapped with the resonant inductor Lr. As shown in FIG. 16, the resonant inductor Lr is located in the upper bridge arm part of the bridge arm, one end of the resonant inductor Lr is connected with the clamping device CP, and the other end of the resonant inductor Lr is connected with the anode of the input source DC. For other details about the converter, reference can be made to the description in the example shown in FIG. 15, and the details are not repeated
here any further.

The working principle of the clamp protection circuit in the example is described as follows:
If an output load (that is, the output resistor R1) changes greatly, or an output voltage (that is, the voltage on the output resistor R1) jumps from a specific output voltage to another output voltage, or, at the instant of output short-circuiting, due to an inherent resonance process, a high resonance voltage can be generated on the resonant inductor Lr. When the voltage on the resonant inductor Lr is higher than VCD+VD 1+VCP, the first clamp diode D1 and the clamping device CP are turned on, and the voltage of the resonant inductor Lr is clamped at VCD+VD1+VCP to the highest extent; when the voltage on the resonant inductor Lr is lower than -(VD2+VCP), the second clamp diode D2 and the clamping device CP are turned on, and the voltage of the resonant inductor Lr is clamped at -(VD2+VCP) to the lowest extent.

In the example, the clamp protection circuit uses two diodes connected in series to form a bridge arm, and a clamping device is led out of a midpoint of the bridge arm; the voltage of a resonant inductor can be clamped by connecting the resonant inductor between the clamping device and an input source. Compared with the prior art, the clamp protection circuit in the example uses only one clamping device, thereby reducing the number of clamping devices required, and reducing the cost of the clamp protection circuit and the space occupied by the clamp protection circuit, and further making it easy to reduce the size of the whole resonant circuit.

FIG. 17 is a schematic structural diagram of a converter according to another example. As shown in FIG. 17, the converter in this embodiment is similar to the converter in the example shown in FIG. 15, but the difference lies in that the resonant capacitor Cr in this example is located in the
lower bridge arm part of the bridge arm, that is, the other end of the resonant capacitor Cr is connected with the cathode of the input source DC. For other details about the converter, reference can be made to the description in the example shown in FIG. 15, and the details are not repeated here any further.

The working principle of the clamp protection circuit in the example is described as follows:
If an output load (that is, the output resistor R1) changes greatly, or an output voltage (that is, the voltage on the output resistor R1) jumps from a specific output voltage to another output voltage, or, at the instant of output short-circuiting, due to an inherent resonance process, a high resonance voltage can be generated on the resonant capacitor Cr. When the voltage on the resonant capacitor Cr is higher than VDC+VD1+VCP, the first clamp diode D1 and the clamping device CP are turned on, and the voltage of the resonant capacitor Cr is clamped at VDC+VD1+VCP to the highest extent; when the voltage on the resonant capacitor Cr is lower than -(VD2+VCP), the second clamp diode D2 and the clamping device CP are turned on, and the voltage of the resonant capacitor Cr is clamped at -(VD2+VCP) to the lowest extent.

Further, the range of the clamping voltage of the resonant capacitor Cr may be adjusted by changing a clamping device CP that has a different operation voltage.

In the example, the clamp protection circuit uses two diodes connected in series to form a bridge arm,
and a clamping device is led out of a midpoint of the bridge arm; the voltage of a resonant capacitor can be clamped by connecting the resonant capacitor between the clamping device and an input source. Compared with the prior art, the clamp protection circuit in the example uses only one clamping device, thereby reducing the number of clamping devices required, and reducing the cost of the clamp protection circuit and the space occupied by the clamp protection circuit, and further making it easy to reduce the size of the whole resonant circuit.

FIG. 18 is a schematic structural diagram of a converter according to another example As shown in FIG. 18, the converter in this example is similar to the converter in the example shown in FIG. 16, but the difference lies in that the resonant inductor Lr in thi example is located in the
lower bridge arm part of the bridge arm, that is, the other end of the resonant inductor Lr is connected with the cathode of the input source DC. For other details about the converter, reference can be made to the description in the example shown in FIG. 16, and the details are not repeated here any further.

The working principle of the clamp protection circuit in the example is described as follows:
If an output load (that is, the output resistor R1) changes greatly, or an output voltage (that is, the voltage on the output resistor R1) jumps from a specific output voltage to another output voltage, or, at the instant of output short-circuiting, due to an inherent resonance process, a high resonance voltage can be generated on the resonant inductor Lr. When the voltage on the resonant inductor Lr is higher than VDC+VD 1+VCP, the first clamp diode D1 and the clamping device CP are turned on, and the voltage of the resonant inductor Lr is clamped at VDC+VD1+VCP to the highest extent; when the voltage on the resonant inductor Lr is lower than -(VD2+VCP), the second clamp diode D2 and the clamping device CP are turned on, and the voltage of the resonant inductor Lr is clamped at -(VD2+VCP) to the lowest extent.

Further, the range of the clamping voltage of the resonant inductor Lr may be determined by selecting an operation voltage of a clamping device CP. In this way, the range of the clamping voltage is adjustable.

In the example, the clamp protection circuit uses two diodes connected in series to form a bridge arm,
and a clamping device is led out of a midpoint of the bridge arm; the voltage of a resonant inductor can be clamped by connecting the resonant inductor between the clamping device and an input source. Compared with the prior art, the clamp protection circuit in the example uses only one clamping device, thereby reducing the
number of clamping devices required, and reducing the cost of the clamp protection circuit and the space occupied by the clamp protection circuit, and further making it easy to reduce the size of the whole resonant circuit.

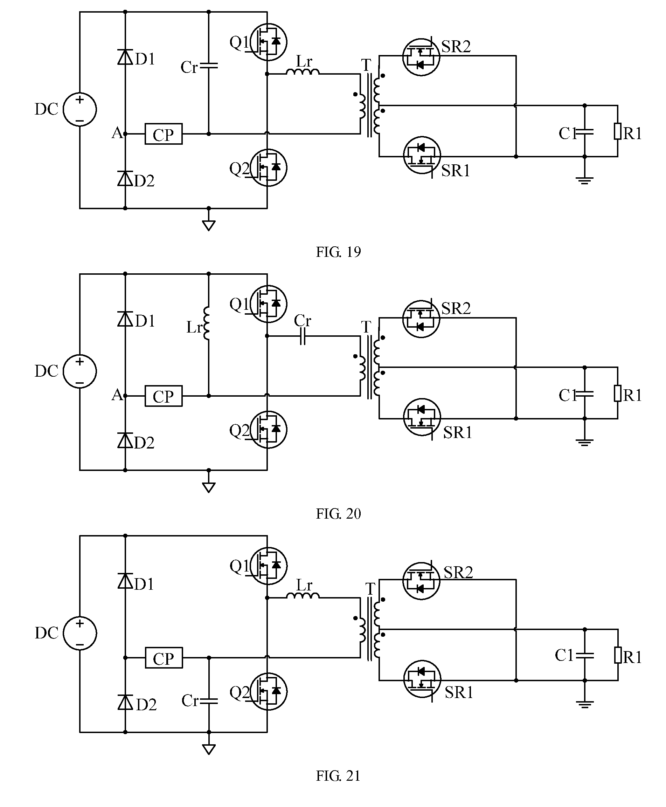

FIG. 19 is a schematic structural diagram of a converter according to another example of the present
invention. As shown in FIG. 19, the converter in the example includes a clamp protection circuit, an
asymmetric half bridge, and a rectifier circuit.

The clamp protection circuit includes a first clamp diode D1, a second clamp diode D2, and a clamping device CP.

The asymmetric half bridge includes an input source DC, a resonant capacitor Cr, and a resonant inductor Lr. The asymmetric half bridge, which includes the input source DC, the resonant capacitor Cr, and the resonant inductor Lr, may come in different structures. The example takes an LC asymmetric half bridge as an
example. As shown in FIG. 19, the asymmetric half bridge in the example is an LC asymmetric half bridge
that is formed by an input source DC, a resonant capacitor Cr, a first MOS transistor Q 1, a second MOS transistor Q2, a resonant inductor Lr, and a transformer T. The transformer T is an ideal transformer whose excitation inductance is infinite (hence not illustrated). The rectifier circuit is connected with the asymmetric half bridge. The transformer T and the rectifier circuit make up the output load of the asymmetric half bridge (that is, the rectifier circuit).

As shown in FIG. 19, the rectifier circuit in the example is a synchronous rectifier circuit that is formed
by a first rectification MOS transistor SR1, a second rectification MOS transistor SR2, an output capacitor C1, and an output resistor R1. In addition to being a synchronous rectifier circuit, the rectifier circuit in the embodiment may also be a diode rectifier circuit that is formed by a first rectification diode, a second rectification diode, an output capacitor, and an output resistor. The diode rectifier circuit differs from the synchronous rectifier circuit in that a diode instead of a MoS transistor is used as a rectifier.

The first clamp diode D1 is connected in series with the second clamp diode D2 to form a bridge arm. The cathode of the first clamp diode D1 is connected with the anode of the input source DC, and the anode of the second clamp diode D2 is connected with the cathode of the input source DC. One end of the clamping device CP is connected with a midpoint A of the bridge arm, the other end of the clamping device CP is connected with one end of the resonant capacitor Cr; and the other end of the resonant capacitor Cr is connected with the anode or the cathode of the input source DC.

As shown in FIG. 19, the resonant capacitor Cr is located in the upper bridge arm part of the bridge arm, and the other end of the resonant capacitor Cr is connected with the anode of the input source DC.

Optionally, the clamping device CP may be, but is not limited to, any one of a bidirectional TVS diode, a dual Zener diode, a varistor, a gas discharge tube and an RC parallel connected device, or any combination thereof.

The resonant circuit in this example is similar to the resonant circuit in the example shown in FIG. 15, but differs in the structure of the asymmetric half bridge.

The working principle of the clamp protection circuit in the example is described as follows:
If an output load (that is, the output resistor R1) changes greatly, or an output voltage (that is, the voltage on the output resistor R1) jumps from a specific output voltage to another output voltage, or, at the instant of output short-circuiting, due to an inherent resonance process, a high resonance voltage can be generated on the resonant capacitor Cr. When the voltage on the resonant capacitor Cr is higher than VCD+VD1+VCP, the first clamp diode D1 and the clamping device CP are turned on, and the voltage of the resonant capacitor Cr is clamped at VCD+VD1+VCP to the highest extent; when the voltage on the resonant capacitor Cr is lower than -(VD2+VCP), the second clamp diode D2 and the clamping device CP are turned on, and the voltage of the resonant capacitor Cr is clamped at -(VD2+VCP) to the lowest extent.

Further, the range of the clamping voltage of the resonant capacitor Cr may be adjusted by changing a clamping device CP that has a different operation voltage.

In the example, the clamp protection circuit uses two diodes connected in series to form a bridge arm,
and a clamping device is led out of a midpoint of the bridge arm; the voltage of a resonant capacitor can be clamped by connecting the resonant capacitor between the clamping device and an input source. Compared with the prior art, the clamp protection circuit in the example uses only one clamping device, thereby reducing the
number of clamping devices required, and reducing the cost of the clamp protection circuit and the space occupied by the clamp protection circuit, and further making it easy to reduce the size of the whole resonant circuit.

FIG. 20 is a schematic structural diagram of a converter according to another example.

As shown in FIG. 20, the converter in this example is similar to the converter in the example shown in FIG. 19, but the difference lies in that the resonant capacitor Cr is swapped with the resonant inductor Lr. As shown in FIG. 20, the resonant inductor Lr is located in the upper bridge arm part of the bridge arm, one end of the resonant inductor Lr is connected with the clamping device CP, and the other end of the resonant inductor Lr is connected with the anode of the input source DC. For other details about the resonant circuit, reference can be made to the description in the example shown in FIG. 19, and the details are not repeated
here any further.

The working principle of the clamp protection circuit in the example is described as follows:
If an output load (that is, the output resistor R1) changes greatly, or an output voltage (that is, the voltage on the output resistor R1) jumps from a specific output voltage to another output voltage, or, at the instant of output short-circuiting, due to an inherent resonance process, a high resonance voltage can be generated on the resonant inductor Lr. When the voltage on the resonant inductor Lr is higher than VCD+VD1+VCP, the first clamp diode D1 and the clamping device CP are turned on, and the voltage of the resonant inductor Lr is clamped at VCD+VD1+VCP to the highest extent; when the voltage on the resonant inductor Lr is lower than -(VD2+VCP), the second clamp diode D2 and the clamping device CP are turned on, and the voltage of the resonant inductor Lr is clamped at -(VD2+VCP) to the lowest extent.

In the example, the clamp protection circuit uses two diodes connected in series to form a bridge arm,
and a clamping device is led out of a midpoint of the bridge arm; the voltage of a resonant inductor can be clamped by connecting the resonant inductor between the clamping device and an input source. Compared with the prior art, the clamp protection circuit in the example uses only one clamping device, thereby reducing the
number of clamping devices required, and reducing the cost of the clamp protection circuit and the space occupied by the clamp protection circuit, and further making it easy to reduce the size of the whole resonant circuit.

FIG. 21 is a schematic structural diagram of a converter according to another example of the present
invention. As shown in FIG. 21, the converter in this example is similar to the converter in the example shown in FIG. 19, but the difference lies in that the resonant capacitor Cr in this example is located in the
lower bridge arm part of the bridge arm, that is, the other end of the resonant capacitor Cr is connected with the cathode of the input source DC. For other details about the converter, reference can be made to the description in the embodiment shown in FIG. 19, and the details are not repeated here any further.

The working principle of the clamp protection circuit in the example is described as follows:
If an output load (that is, the output resistor R1) changes greatly, or an output voltage (that is, the voltage on the output resistor R1) jumps from a specific output voltage to another output voltage, or, at the instant of output short-circuiting, due to an inherent resonance process, a high resonance voltage can be generated on the resonant capacitor Cr. When the voltage on the resonant capacitor Cr is higher than VDC+VD1+VCP, the first clamp diode D1 and the clamping device CP are turned on, and the voltage of the resonant capacitor Cr is clamped at VDC+VD1+VCP to the highest extent; when the voltage on the resonant capacitor Cr is lower than -(VD2+VCP), the second clamp diode D2 and the clamping device CP are turned on, and the voltage of the resonant capacitor Cr is clamped at -(VD2+VCP) to the lowest extent.

Further, the range of the clamping voltage of the resonant capacitor Cr may be adjusted by changing a clamping device CP that has a different operation voltage.

In the example, the clamp protection circuit uses two diodes connected in series to form a bridge arm,
and a clamping device is led out of a midpoint of the bridge arm; the voltage of a resonant capacitor can be clamped by connecting the resonant capacitor between the clamping device and an input source. Compared with the prior art, the clamp protection circuit in the example uses only one clamping device, thereby reducing the
number of clamping devices required, and reducing the cost of the clamp protection circuit and the space occupied by the clamp protection circuit, and further making it easy to reduce the size of the whole resonant circuit.

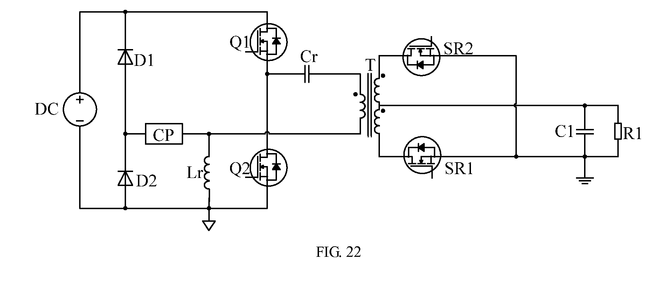

FIG. 22 is a schematic structural diagram of a resonant circuit according to another example of the present invention. As shown in FIG. 22, the converter in this example is similar to the converter in the
embodiment shown in FIG. 20, but the difference lies in that the resonant inductor Lr in this example is
located in the lower bridge arm part of the bridge arm, that is, the other end of the resonant inductor Lr is connected with the cathode of the input source DC. For other details about the converter, reference can be made to the description in the embodiment shown in FIG. 20, and the details are not repeated here any further.

The working principle of the clamp protection circuit in the example is described as follows:
If an output load (that is, the output resistor R1) changes greatly, or an output voltage (that is, the voltage on the output resistor R1) jumps from a specific output voltage to another output voltage, or, at the instant of output short-circuiting, due to an inherent resonance process, a high resonance voltage can be generated on the resonant inductor Lr. When the voltage on the resonant inductor Lr is higher than VDC+VD1+VCP, the first clamp diode D1 and the clamping device CP are turned on, and the voltage of the resonant inductor Lr is clamped at VDC+VD1+VCP to the highest extent; when the voltage on the resonant inductor Lr is lower than -(VD2+VCP), the second clamp diode D2 and the clamping device CP are turned on, and the voltage of the resonant inductor Lr is clamped at -(VD2+VCP) to the lowest extent.

Further, the range of the clamping voltage of the resonant inductor Lr may be adjusted by changing a clamping device CP that has a different operation voltage.

In the example, the clamp protection circuit uses two diodes connected in series to form a bridge arm,
and a clamping device is led out of a midpoint of the bridge arm; the voltage of a resonant inductor can be clamped by connecting the resonant inductor between the clamping device and an input source. Compared with the prior art, the clamp protection circuit in the example uses only one clamping device, thereby reducing the
number of clamping devices required, and reducing the cost of the clamp protection circuit and the space occupied by the clamp protection circuit, and further making it easy to reduce the size of the whole resonant circuit.

Persons of ordinary skill in the art may understand that all or a part of the steps of the method example may be implemented by a program instructing relevant hardware. The foregoing program may be stored in a computer readable storage medium. When the program is run, the steps of the forgoing methods in the examples are performed. The storage medium includes any medium that is capable of storing program codes, such as a ROM, a RAM, a magnetic disk, or an optical disk.

## Claims

1. A clamp protection circuit, configured to perform clamp protection for a symmetric half bridge, the clamp protection circuit comprising: a first clamp diode (D1), a second clamp diode (D2), and a clamping device (CP), wherein:
the clamp protection circuit is configured to be connected with an input source of the symmetric half bridge and configured to perform clamp protection for a first resonant capacitor (Cr1) and a second resonant capacitor (Cr2) of the symmetric half bridge; and
the first clamp diode (D1) is connected in series with the second clamp diode (D2) to form a bridge arm; a cathode of the first clamp diode (D1) is configured to be connected with an anode of the input source, and an anode of the second clamp diode (D2) configured to be connected with a cathode of the input source; one end of the clamping device is connected with a midpoint (A) of the bridge arm, and the other end of the clamping device is configured to be connected with one end of the first resonant capacitor (Cr1) and one end of the second resonant capacitor (Cr2)..

2. The clamp protection circuit according to claim 1, wherein:
the clamping device is any one of a bidirectional transient voltage suppression diode TVS, a dual Zener diode ZENER, a varistor, a gas discharge tube and a resistor-capacitor RC parallel connected device, or at least two of them connected in series or in parallel.

3. A resonant circuit, comprising a clamp protection circuit according to claim 1 or 2 and an asymmetric half bridge, wherein:
the first clamp diode (D1) is connected in series with the second clamp diode (D2) to form a bridge arm; a cathode of the first clamp diode (D1) is connected with an anode of the input source, and an anode of the second clamp diode (D2) is connected with a cathode of the input source; one end of the clamping device is connected with a midpoint (A) of the bridge arm, and the other end of the clamping device is connected with one end of the first and second resonant capacitors (Cr1, Cr2) or a resonant inductor; and the other end of the first and second resonant capacitor (Cr1, Cr2) or the other end of the resonant inductor is connected with the input source.

4. The resonant circuit according to claim 3, wherein:
the asymmetric half bridge is an LLC asymmetric half bridge, and is mainly formed by the input source, the resonant capacitor, a first metal oxide semiconductor MOS transistor, a second MOS transistor, the resonant inductor, and a transformer; or
the asymmetric half bridge is an LC asymmetric half bridge, and is mainly formed by the input source, the resonant capacitor, a first MOS transistor, a second MOS transistor, the resonant inductor, and a transformer.

5. The resonant circuit according to claim 3 or 4, wherein:
the resonant capacitor or the resonant inductor is located in an upper bridge arm part of the bridge arm, and the other end of the resonant capacitor or the other end of the resonant inductor is connected with the anode of the input source.

6. A converter, comprising a clamp protection circuit according claim 1 or 2, a symmetric half bridge, and a rectifier circuit, wherein:
the rectifier circuit is connected with the symmetric half bridge; and
the first clamp diode (D1) is connected in series with the second clamp diode (D2) to form a bridge arm; a cathode of the first clamp diode (D1) is connected with an anode of the input source, and an anode of the second clamp diode (D2) is connected with a cathode of the input source; one end of the clamping device is connected with a midpoint (A) of the bridge arm, and the other end of the clamping device is connected with one end of the first resonant capacitor (Cr1) and one end of the second resonant capacitor (Cr2); and the other end of the first resonant capacitor (Cr1) and the other end of the second resonant capacitor (Cr2) are connected with the input source.

7. The converter according to claim 6, wherein:
the symmetric half bridge is an LLC symmetric half bridge, and is mainly formed by the input source, the first resonant capacitor, the second resonant capacitor, a first metal oxide semiconductor MOS transistor, a second MOS transistor, a resonant inductor, and a transformer; or
the symmetric half bridge is an LC symmetric half bridge, and is mainly formed by the input source, the first resonant capacitor, the second resonant capacitor, a first MOS transistor, a second MOS transistor, a resonant inductor, and a transformer.

8. The converter according to claim 6, wherein:
the rectifier circuit is a synchronous rectifier circuit that is formed by a first rectification MOS transistor, a second rectification MOS transistor, an output capacitor, and an output resistor; or
the rectifier circuit is a diode rectifier circuit that is formed by a first rectification diode, a second rectification diode, an output capacitor, and an output resistor.

9. A converter, comprising a clamp protection circuit according claims 1 or 2, an asymmetric half bridge, and a rectifier circuit, wherein:
the rectifier circuit is connected with the asymmetric half bridge; and
the first clamp diode (D1) is connected in series with the second clamp diode (D2) to form a bridge arm; a cathode of the first clamp diode (D1) is connected with an anode of the input source, and an anode of the second clamp diode (D2) is connected with a cathode of the input source; one end of the clamping device is connected with a midpoint (A) of the bridge arm, and the other end of the clamping device is connected with one end of the first and second resonant capacitors (Cr1, Cr2) or one end of a resonant inductor; and the other end of the first and second resonant capacitors (Cr1, Cr2) or the other end of the resonant inductor is respectively connected with the anode and cathode of the input source.

10. The converter according to claim 9, wherein:
the asymmetric half bridge is an LLC asymmetric half bridge, and is mainly formed by the input source, the resonant capacitor, a first metal oxide semiconductor MOS transistor, a second MOS transistor, the resonant inductor, and a transformer; or
the asymmetric half bridge is an LC asymmetric half bridge, and is mainly formed by the input source, the resonant capacitor, a first MOS transistor, a second MOS transistor, the resonant inductor, and a transformer.

11. The converter according to claim 9, wherein:
the rectifier circuit is a synchronous rectifier circuit that is formed by a first rectification MOS transistor, a second rectification MOS transistor, an output capacitor, and an output resistor; or
the rectifier circuit is a diode rectifier circuit that is formed by a first rectification diode, a second rectification diode, an output capacitor, and an output resistor.

## Patentansprüche

1. Klemmenschutzschaltung, die dazu ausgestaltet ist, Klemmenschutz für eine symmetrische Halbbrücke durchzuführen, wobei die Klemmenschutzschaltung Folgendes umfasst: eine erste Klemmendiode (D1), eine zweite Klemmendiode (D2) und eine Klemmenvorrichtung (CP), wobei:
die Klemmenschutzschaltung dazu ausgestaltet ist, mit einer Eingangsquelle der symmetrischen Halbbrücke verbunden zu werden, und dazu ausgestaltet ist, Klemmenschutz für einen ersten Resonanzkondensator (Cr1) und einen zweiten Resonanzkondensator (Cr2) der symmetrischen Halbbrücke durchzuführen; und
die erste Klemmendiode (D1) mit der zweiten Klemmendiode (D2) in Reihe geschaltet ist, um einen Brückenarm auszubilden; eine Kathode der ersten Klemmendiode (D1) dazu ausgestaltet ist, mit einer Anode der Eingangsquelle verbunden zu werden, und eine Anode der zweiten Klemmendiode (D2) dazu ausgestaltet ist, mit einer Kathode der Eingangsquelle verbunden zu werden; ein einziges Ende der Klemmenvorrichtung mit einem Mittelpunkt (A) des Brückenarmes verbunden ist, und das andere Ende der Klemmenvorrichtung dazu ausgestaltet ist, mit einem einzigen Ende des ersten Resonanzkondensators (Cr1) und einem einzigen Ende des zweiten Resonanzkondensators (Cr2) verbunden zu werden.

2. Klemmenschutzschaltung nach Anspruch 1, wobei:
es sich bei der Klemmenvorrichtung um ein beliebiges aus einer bidirektionalen Übergangsspannungsunterdrückungsdiode TVS (Transient Voltage Suppression Diode), einer dualen Zenerdiode ZENER, einem Varistor, einer Gasentladungsröhre und einer parallel geschalteten Widerstandskondensator(RC, Resistor-Capacitor)-Vorrichtung oder mindestens zwei von ihnen handelt, die in Reihe oder parallel geschaltet sind.

3. Resonanzschaltung, umfassend eine Klemmenschutzschaltung nach Anspruch 1 oder 2 und eine asymmetrische Halbbrücke, wobei:
die erste Klemmendiode (D1) mit der zweiten Klemmendiode (D2) in Reihe geschaltet ist, um einen Brückenarm auszubilden; eine Kathode der ersten Klemmendiode (D1) mit einer Anode der Eingangsquelle verbunden ist, und eine Anode der zweiten Klemmendiode (D2) mit einer Kathode der Eingangsquelle verbunden ist; ein einziges Ende der Klemmenvorrichtung mit einem Mittelpunkt (A) des Brückenarmes verbunden ist, und das andere Ende der Klemmenvorrichtung mit einem einzigen Ende des ersten und zweiten Resonanzkondensators (Cr1, Cr2) oder einem Resonanzinduktor verbunden ist; und das andere Ende des ersten und zweiten Resonanzkondensators (Cr1, Cr2) oder das andere Ende des Resonanzinduktors mit der Eingangsquelle verbunden ist.

4. Resonanzschaltung nach Anspruch 3, wobei:
es sich bei der asymmetrischen Halbbrücke um eine asymmetrische LLC-Halbbrücke handelt und die hauptsächlich durch die Eingangsquelle, den Resonanzkondensator, einen ersten Metalloxidhalbleiter(MOS)-Transistor, einen zweiten MOS-Transistor, den Resonanzinduktor und einen Transformator ausgebildet ist; oder
es sich bei der asymmetrischen Halbbrücke um eine asymmetrische LC-Halbbrücke handelt und die hauptsächlich durch die Eingangsquelle, den Resonanzkondensator, einen ersten MOS-Transistor, einen zweiten MOS-Transistor, den Resonanzinduktor und einen Transformator ausgebildet ist.

5. Resonanzschaltung nach Anspruch 3 oder 4, wobei:
sich der Resonanzkondensator oder der Resonanzinduktor in einem oberen Brückenarmteil des Brückenarmes befindet, und das andere Ende des Resonanzkondensators oder das andere Ende des Resonanzinduktors mit der Anode der Eingangsquelle verbunden ist.

6. Wandler, der eine Klemmenschutzschaltung nach Anspruch 1 oder 2 und eine symmetrische Halbbrücke und eine Gleichrichterschaltung umfasst, wobei:
die Gleichrichterschaltung mit der symmetrischen Halbbrücke verbunden ist; und
die erste Klemmendiode (D1) mit der zweiten Klemmendiode (D2) in Reihe geschaltet ist, um einen Brückenarm auszubilden; eine Kathode der ersten Klemmendiode (D1) mit einer Anode der Eingangsquelle verbunden ist, und eine Anode der zweiten Klemmendiode (D2) mit einer Kathode der Eingangsquelle verbunden ist; ein einziges Ende der Klemmenvorrichtung mit einem Mittelpunkt (A) des Brückenarmes verbunden ist, und das andere Ende der Klemmenvorrichtung mit einem einzigen Ende des ersten Resonanzkondensators (Cr1) und einem einzigen Ende des zweiten Resonanzkondensators (Cr2) verbunden ist; und das andere Ende des ersten Resonanzkondensators (Cr1) und das andere Ende des zweiten Resonanzkondensators (Cr2) mit der Eingangsquelle verbunden ist.

7. Wandler nach Anspruch 6, wobei:
es sich bei der symmetrischen Halbbrücke um eine symmetrische LLC-Halbbrücke handelt und die hauptsächlich durch die Eingangsquelle, den ersten Resonanzkondensator, den zweiten Resonanzkondensator, einen ersten Metalloxidhalbleiter(MOS)-Transistor, einen zweiten MOS-Transistor, einen Resonanzinduktor und einen Transformator ausgebildet ist; oder
es sich bei der symmetrischen Halbbrücke um eine symmetrische LC-Halbbrücke handelt und die hauptsächlich durch die Eingangsquelle, den ersten Resonanzkondensator, den zweiten Resonanzkondensator, einen ersten MOS-Transistor, einen zweiten MOS-Transistor, einen Resonanzinduktor und einen Transformator ausgebildet ist.

8. Wandler nach Anspruch 6, wobei:
es sich bei der Gleichrichterschaltung um eine synchrone Gleichrichterschaltung handelt, die durch einen ersten MOS-Gleichrichtungstransistor, einen zweiten MOS-Gleichrichtungstransistor, einen Ausgangskondensator und einen Ausgangswiderstand ausgebildet ist; oder
es sich bei der Gleichrichterschaltung um eine Diodengleichrichterschaltung handelt, die durch eine erste Gleichrichtungsdiode, eine zweite Gleichrichtungsdiode, einen Ausgangskondensator und einen Ausgangswiderstand ausgebildet ist.

9. Wandler, der eine Klemmenschutzschaltung nach Anspruch 1 oder 2, eine asymmetrische Halbbrücke und eine Gleichrichterschaltung umfasst, wobei:
die Gleichrichterschaltung mit der asymmetrischen Halbbrücke verbunden ist; und
die erste Klemmendiode (D1) mit der zweiten Klemmendiode (D2) in Reihe geschaltet ist, um einen Brückenarm auszubilden; eine Kathode der ersten Klemmendiode (D1) mit einer Anode der Eingangsquelle verbunden ist, und eine Anode der zweiten Klemmendiode (D2) mit einer Kathode der Eingangsquelle verbunden ist; ein einziges Ende der Klemmenvorrichtung mit einem Mittelpunkt (A) des Brückenarmes verbunden ist, und das andere Ende der Klemmenvorrichtung mit einem einzigen Ende des ersten und des zweiten Resonanzkondensators (Cr1, Cr2) oder einem einzigen Ende eines Resonanzinduktors verbunden ist; und das andere Ende des ersten und des zweiten Resonanzkondensators (Cr1, Cr2) oder das andere Ende des Resonanzinduktors jeweils mit der Anode und Kathode der Eingangsquelle verbunden ist.

10. Wandler nach Anspruch 9, wobei:
es sich bei der asymmetrischen Halbbrücke um eine asymmetrische LLC-Halbbrücke handelt und die hauptsächlich durch die Eingangsquelle, den Resonanzkondensator, einen ersten Metalloxidhalbleiter(MOS)-Transistor, einen zweiten MOS-Transistor, den Resonanzinduktor und einen Transformator ausgebildet ist; oder
es sich bei der asymmetrischen Halbbrücke um eine asymmetrische LC-Halbbrücke handelt, und die hauptsächlich durch die Eingangsquelle, den Resonanzkondensator, einen ersten MOS-Transistor, einen zweiten MOS-Transistor, den Resonanzinduktor und einen Transformator ausgebildet ist.

11. Wandler nach Anspruch 9, wobei:
es sich bei der Gleichrichterschaltung um eine synchrone Gleichrichterschaltung handelt, die durch einen ersten MOS-Gleichrichtungstransistor, einen zweiten MOS-Gleichrichtungstransistor, einen Ausgangskondensator und einen Ausgangswiderstand ausgebildet ist; oder
es sich bei der Gleichrichterschaltung um eine Diodengleichrichterschaltung handelt, die durch eine erste Gleichrichtungsdiode, eine zweite Gleichrichtungsdiode, einen Ausgangskondensator und einen Ausgangswiderstand ausgebildet ist.

## Revendications

1. Circuit de protection de fixation de niveau, conçu pour effectuer une protection de fixation de niveau pour un demi-pont symétrique, le circuit de protection de fixation de niveau comprenant : une première diode de niveau (D1), une seconde diode de niveau (D2) et un dispositif de fixation de niveau (CP), dans lequel :
le circuit de protection de fixation de niveau est conçu pour être connecté à une source d'entrée du demi-pont symétrique, et conçu pour effectuer une protection de fixation de niveau pour un premier condensateur résonnant (Cr1) et un second condensateur résonnant (Cr2) du demi-pont symétrique ; et
la première diode de niveau (D1) est connectée en série avec la seconde diode de niveau (D2) pour former une branche de pont ; une cathode de la première diode de niveau (D1) est conçue pour être connectée à une anode de la source d'entrée, et une anode de la seconde diode de niveau (D2) est conçue pour être connectée à une cathode de la source d'entrée ; une extrémité du dispositif de fixation de niveau est connectée à un point médian (A) de la branche de pont, et l'autre extrémité du dispositif de fixation de niveau est conçue pour être connectée à une extrémité du premier condensateur résonnant (Cr1) et à une extrémité du second condensateur résonnant (Cr2).

2. Circuit de protection de fixation de niveau selon la revendication 1, dans lequel :
le dispositif de fixation de niveau est un dispositif quelconque parmi une diode suppresseuse de surtension (TVS) bidirectionnelle, une diode Zener double (ZENER), une varistance, un tube à décharge gazeuse et un dispositif à résistance-condensateur (RC) connectés en parallèle, ou au moins deux de ces dispositifs connectés en série ou en parallèle.

3. Circuit résonnant, comprenant un circuit de protection de fixation de niveau selon la revendication 1 ou 2 et un demi-pont asymétrique, dans lequel :
la première diode de niveau (D1) est connectée en série avec la seconde diode de niveau (D2) pour former une branche de pont ; une cathode de la première diode de niveau (D1) est connectée à une anode de la source d'entrée, et une anode de la seconde diode de niveau (D2) est connectée à une cathode de la source d'entrée ; une extrémité du dispositif de fixation de niveau est connectée à un point médian (A) de la branche de pont, et l'autre extrémité du dispositif de fixation de niveau est connectée à une extrémité des premier et second condensateurs résonnants (Cr1, Cr2) ou à une bobine d'induction résonnante ; et l'autre extrémité des premier et second condensateurs résonnants (Cr1, Cr2) ou l'autre extrémité de la bobine d'induction résonnante est connectée à la source d'entrée.

4. Circuit résonnant selon la revendication 3, dans lequel :
le demi-pont asymétrique est un demi-pont asymétrique LLC et est principalement formé par la source d'entrée, le condensateur résonnant, un premier transistor à semiconducteur à l'oxyde de métal (MOS), un second transistor MOS, la bobine d'induction résonnante et un transformateur ; ou
le demi-pont asymétrique est un demi-pont asymétrique LC et est principalement formé par la source d'entrée, le condensateur résonnant, un premier transistor MOS, un second transistor MOS, la bobine d'induction résonnante et un transformateur.

5. Circuit résonnant selon la revendication 3 ou 4, dans lequel :
le condensateur résonnant ou la bobine d'induction résonnante est situé dans une partie supérieure de branche de pont de la branche de pont, et l'autre extrémité du condensateur résonnant ou l'autre extrémité de la bobine d'induction résonnante est connectée à l'anode de la source d'entrée.

6. Onduleur, comprenant un circuit de protection de fixation de niveau selon la revendication 1 ou 2, un demi-pont symétrique et un circuit redresseur, dans lequel :
le circuit redresseur est connecté au demi-pont symétrique ; et
la première diode de niveau (D1) est connectée en série avec la seconde diode de niveau (D2) pour former une branche de pont ; une cathode de la première diode de niveau (D1) est connectée à une anode de la source d'entrée, et une anode de la seconde diode de niveau (D2) est connectée à une cathode de la source d'entrée ; une extrémité du dispositif de fixation de niveau est connectée à un point médian (A) de la branche de pont, et l'autre extrémité du dispositif de fixation de niveau est connectée à une extrémité du premier condensateur résonnant (Cr1) et à une extrémité du second condensateur résonnant (Cr2) ; et l'autre extrémité du premier condensateur résonnant (Cr1) et l'autre extrémité du second condensateur résonnant (Cr2) sont connectées à la source d'entrée.

7. Onduleur selon la revendication 6, dans lequel :
le demi-pont symétrique est un demi-pont symétrique LLC et est principalement formé par la source d'entrée, le premier condensateur résonnant, le second condensateur résonnant, un premier transistor à semiconducteur à l'oxyde de métal (MOS), un second transistor MOS, une bobine d'induction résonnante et un transformateur ; ou
le demi-pont symétrique est un demi-pont symétrique LC et est principalement formé par la source d'entrée, le premier condensateur résonnant, le second condensateur résonnant, un premier transistor MOS, un second transistor MOS, une bobine d'induction résonnante et un transformateur.

8. Onduleur selon la revendication 6, dans lequel :
le circuit redresseur est un circuit redresseur synchrone formé par un premier transistor MOS redresseur, un second transistor MOS redresseur, un condensateur de sortie et une résistance de sortie ; ou
le circuit redresseur est un circuit redresseur à diode formé par une première diode redresseuse, une seconde diode redresseuse, un condensateur de sortie et une résistance de sortie.

9. Onduleur, comprenant un circuit de protection de fixation de niveau selon la revendication 1 ou 2, un demi-pont asymétrique et un circuit redresseur, dans lequel :
le circuit redresseur est connecté au demi-pont asymétrique ; et
la première diode de niveau (D1) est connectée en série avec la seconde diode de niveau (D2) pour former une branche de pont ; une cathode de la première diode de niveau (D1) est connectée à une anode de la source d'entrée, et une anode de la seconde diode de niveau (D2) est connectée à une cathode de la source d'entrée ; une extrémité du dispositif de fixation de niveau est connectée à un point médian (A) de la branche de pont, et l'autre extrémité du dispositif de fixation de niveau est connectée à une extrémité des premier et second condensateurs résonnants (Cr1, Cr2) ou à une extrémité d'une bobine d'induction résonnante ; et l'autre extrémité des premier et second condensateurs résonnants (Cr1, Cr2) ou l'autre extrémité de la bobine d'induction résonnante est respectivement connectée à l'anode et à la cathode de la source d'entrée.

10. Onduleur selon la revendication 9, dans lequel :
le demi-pont asymétrique est un demi-pont asymétrique LLC et est principalement formé par la source d'entrée, le condensateur résonnant, un premier transistor à semiconducteur à l'oxyde de métal (MOS), un second transistor MOS, la bobine d'induction résonnante et un transformateur ; ou
le demi-pont asymétrique est un demi-pont asymétrique LC et est principalement formé par la source d'entrée, le condensateur résonnant, un premier transistor MOS, un second transistor MOS, la bobine d'induction résonnante et un transformateur.

11. Onduleur selon la revendication 9, dans lequel :
le circuit redresseur est un circuit redresseur synchrone formé par un premier transistor MOS redresseur, un second transistor MOS redresseur, un condensateur de sortie et une résistance de sortie ; ou
le circuit redresseur est un circuit redresseur à diode formé par une première diode redresseuse, une seconde diode redresseuse, un condensateur de sortie et une résistance de sortie.
